(19) **Europäisches Patentamt**

**European Patent Office**

**Office européen des brevets**

(11) **EP 1 228 144 B1**

(12) **EUROPEAN PATENT SPECIFICATION**

(45) Date of publication and mention
of the grant of the patent:
**02.08.2006 Bulletin 2006/31**

(51) Int Cl.:
**C08L 53/00** (2006.01)   **C08L 53/02** (2006.01)
**B32B 27/32** (2006.01)   **A61L 15/00** (2006.01)

(21) Application number: **00961944.6**

(22) Date of filing: **15.09.2000**

(86) International application number:
**PCT/US2000/025421**

(87) International publication number:
**WO 2001/019918 (22.03.2001 Gazette 2001/12)**

(54) **RADIATION CROSSLINKED ELASTOMERIC MATERIALS**

STRAHLUNGVERNETZTE ELASTOMERISCHE MATERIALIEN

MATERIAUX ELASTOMERES RETICULES PAR RAYONNEMENT

(84) Designated Contracting States:
**AT BE CH CY DE DK ES FI FR GB GR IE IT LI LU MC NL PT SE**

(30) Priority: **17.09.1999 US 397889**
**18.02.2000 US 507417**

(43) Date of publication of application:
**07.08.2002 Bulletin 2002/32**

(73) Proprietor: **THE PROCTER & GAMBLE COMPANY**
**Cincinnati, Ohio 45202 (US)**

(72) Inventors:
• **ZHANG, John, Jianbin**
**Cincinnati, OH 45249 (US)**
• **DAUGHERTY, Thomas, Hugh**
**Cincinnati, OH 45236 (US)**
• **MCNALLY, Matthew, Gerald**
**West Chester, OH 45069 (US)**

(74) Representative: **Hirsch, Uwe Thomas M.H. et al**
**Procter & Gamble Service GmbH**
**Sulzbacher Strasse 40-50**
**65824 Schwalbach am Taunus (DE)**

(56) References cited:
EP-A- 0 452 089          EP-A- 0 518 444
EP-A- 0 574 591          EP-A- 0 634 453
EP-A- 0 770 645          EP-A- 0 810 262
EP-A- 0 881 258          EP-A- 0 919 590
WO-A-91/09083            WO-A-95/26380
US-A- 5 503 919

## Description

The present invention relates to radiation crosslinked relaxation elastomeric material suitable for use in porous extensible polymeric webs. In particular, the present invention relates to macroscopically-expanded three-dimensional apertured polymeric webs.

It has long been known in the field of disposable absorbent articles that it is desirable to construct absorptive devices, such as disposable diapers, pull-on diapers, training pants, sanitary napkins, pantiliners, incontinent briefs, bandages, wound dressings, and the like, with elastic elements to improve the range of size, ease of motion, and sustained fit. It is also well known that it is preferable, especially in such products intended to be worn in hot and humid conditions, to provide adequate porosity to all areas of the article where undue occlusion of the skin may cause sensitized skin or heat rash. Due to the nature of many disposable absorbent articles there is a high potential for skin irritation due to trapping of moisture and other body exudates between the elasticized portion of the article and the skin of the wearer. Elasticized portions of disposable articles are particularly prone to causing skin irritations as they tend to be more conformable to the body, and therefore more likely to occlude areas of the skin, often for long periods of time.

Various methods are known in the art for imparting elasticity to polymer films. As materials with greater elasticity provide medical or personal hygiene products with a better fit to the body, the air flow to the skin and the vapor flow from the occluded areas are reduced. Breathability (particularly vapor permeability) becomes more important for skin health. Various methods are also known in the art for imparting porosity to polymer films to improve breathability, but there remains a need for a polymeric film or web that provides for both adequate elasticity and porosity, such as may be adapted for durable, prolonged use in garments, particularly disposable garments.

Disposable diapers and other absorbent articles fitted with elasticized leg cuffs or elasticized waist bands for a more comfortable fit, as well as providing for better leakage control, are known in the art. Often, the elasticity is accomplished with a heat treatment of polymeric materials that results in a desirable shirring or gathering of a portion of the diaper. One such method of treatment is disclosed in U.S. Pat. No. 4,681,580, issued to Reising et al. on July 21, 1987.

Other methods for imparting elasticity are taught in U.S. Pat. No. 5,143,679 issued to Weber et al. on Sept. 1, 1992, U.S. Pat. Nos. 5,156,793 issued to Buell et al. on Oct. 20, 1992 and 5,167,897 issued to Weber et al. on Dec. 1, 1992.

Elasticized portions of a disposable absorbent article can have a skin care composition disposed thereon. The skin care composition can be a skin care lotion to reduce skin irritation of the wearer or to promote skin health. For example, representative skin care treatments are described in U.S. Patent 5,643,588, "Diaper Having a Lotioned Topsheet", issued to Roe, Bakes & Warner on July 1, 1997; and U.S. Patent 5,635,191, "Diaper Having a Lotioned Topsheet Containing a Polysiloxane Emollient", issued to Roe & Mackey on June 3, 1997; and U.S. Patent Application No. 08/962,310 "Absorbent Articles Having Cuffs with Skin Care Composition Disposed Thereon", filed October 31, 1997 by Thomas Edward Schulte et al. Skin care compositions disposed on elasticized portions, as well as the topsheet, can facilitate transfer of the skin care composition to a greater amount of skin, in terms of surface area, relative to treatment of the topsheet only. Furthermore, application to both elasticized and non-elastic components may allow delivery of greater amounts of skin care composition to a given region of the wearer and/or delivery of different formulation skin care compositions for different skin benefits.

Several means of rendering elasticized planar polymer films more porous are known in the art, such as die punching, slitting, and hot-pin melt aperturing. However, when any of the above techniques is applied to thermoplastic elastomeric films, the increase in porosity is accompanied by a decrease in the degree of reliable elastic performance. For example, in the case of circular apertures in a planar film, it is well known that for an applied stress $S_1$, a resultant local stress, $S_2$, is created orthogonal to the applied stress about the apertures. This local stress, $S_2$, is greater than $S_1$, approaching a magnitude up to 3 times the applied stress. For non-round apertures the concentration of stress can be even greater. As a result, apertures become sources of tear initiation sites at their edges, because the edges of the material form the edges of the apertures in the plane of applied stress. For common thermoplastic elastic films, such apertures facilitate tear initiation which can propagate over time leading to catastrophic failure of the film. When used in elasticized portions of disposable absorbent articles, this failure results in the loss of important elastic characteristics, including loss of comfort, fit and use of the absorbent article.

Prior art web structures that do provide adequate porosity so as to be preferable for use as the wearer-contacting surface on disposable absorbent articles have been of two basic varieties, i.e., inherently fluid-pervious structures, such as fibrous nonwovens, and fluid-impervious materials such as polymeric webs which have been provided with a degree of fluid permeability via aperturing to permit fluid and moisture flow therethrough. Neither variety is characteristically elastic, and as a result both are generally used in regions of an absorbent article requiring fluid permeability but not extensibility, such as the body-contacting layer of a catamenial pad.

Commonly assigned U.S. Pat. No. 3,929,135 issued to Thompson on Dec. 30, 1975, suggests a suitable body-contacting porous polymeric web for disposable articles. Thompson teaches a macroscopically-expanded, three-dimensional topsheet comprised of liquid-impermeable polymeric material. However, the polymeric material is formed to comprise tapered capillaries, the capillaries having a base opening in the plane of the topsheet, and an apex opening in intimate contact with the absorbent pad utilized in the disposable absorbent bandage. The polymer material taught by Thompson is not generally an elastomer, however, and Thompson depends on the inelastic properties of the heat-molded single layer film to produce the desired three-dimensional structure.

Still another material which has been utilized as a body contacting surface in a disposable absorbent article context is disclosed in commonly assigned U.S. Pat. No. 4,342,314 issued to Radel et al. on Aug. 3, 1982. The Radel et al. patent discloses an improved macroscopically-expanded three-dimensional plastic web comprising a regulated continuum of capillary networks originating in and extending from one surface of the web and terminating in the form of apertures in the opposite surface thereof. In a preferred embodiment, the capillary networks are of decreasing size in the direction of liquid transport.

The macroscopically-expanded three-dimensional plastic webs of the type generally described in the aforementioned commonly assigned Thompson and Radel et al. patents have met with good success in permitting adequate vapor permeability due to the porosity provided by the apertures. However, because of material limitations such webs do not generally possess the requisite elasticity to allow the resulting web to have significant elastomeric characteristics. This shortcoming substantially limits the use of such webs in elasticized portions of an absorbent article.

An improvement in the aforementioned Radel et al. web for use in disposable absorbent articles is disclosed in commonly assigned, copending US patent application S.N. 08/816,106 entitled Tear Resistant Porous Extensible Web, filed March 14, 1997 in the name of Curro et al. (hereinafter Curro '106). The aforementioned Curro et al. application discloses elasticized polymeric webs generally in accordance with the aforementioned Radel et al. patent that may be produced from elastomeric materials known in the art, and may be laminates of polymeric materials. Laminates of this type can be prepared by coextrusion of elastomeric materials and less elastic skin layers and may be used in the body hugging portions of absorbent garments, such as the waistband portions and leg cuffs.

Elasticized polymeric webs may be produced from elastomeric materials known in the art, and may be laminates of polymeric materials such as disclosed in U.S. Pat. No. 5,501,679, issued to Krueger et al. on March 26, 1996. Laminates of this type are generally prepared by coextrusion of elastomeric materials and inelastic skin layers followed by stretching the laminate past the elastic limit of the skin layers and then allowing the laminate to recover. Elastomeric webs or films such as those described above may be used in the body hugging portions of garments, such as the waistbands, leg cuffs and side panels, but are generally not porous enough to prevent undesirable skin irritations when used for prolonged periods of time.

Despite the aforementioned improvements to elastomeric materials for use in disposable absorbent articles, the use conditions of the articles continually demand further technological improvements to increase article performance and user comfort. For example, actual use condition for absorbent articles or other personal care products typically involves heat, humidity, loading or combinations thereof. Some elastomeric materials suffer loss of elastic properties and dimensional stability at body temperature, especially under load or tension. The loss of elastic properties and dimensional stability results in sagging and ill-fitting of the absorbent article, and in severe cases, leakage from the absorbent article may result.

Further, it has been found that when skin care compositions (including various skin conditioners, skin care ointments, rash treatment lotions, and the like) and certain of the aforementioned polymeric webs are in contact for extended periods of time, the lotion can degrade the elastomeric polymer, thereby significantly degrading the performance of the polymer web. Therefore, because of material limitations such webs tend to undergo degradation of properties when lotioned. For example, when the lotion sufficiently contacts the elastomeric layer of the coextruded laminate disclosed in the aforementioned Curro '106 application, the elastomeric material (e.g., block copolymer) can degrade, thereby reducing the desirable elastomeric properties of the web. This shortcoming can limit the use of such webs in elasticized portions of an absorbent article to non-lotioned components.

Accordingly, it would be desirable to provide an elastomeric web designed to maintain its elastomeric properties when used as a component in a disposable absorbent article and having a skin care composition applied thereto.

It would also be desirable to provide an elastomeric material (including fibers, strands, webs, films, and formed films) which can retain its elastic properties under actual use conditions of the finished product over a specified period of time, for example, at body temperature under sustained load for up to about 10 hours.

It would also be desirable to provide such an elastomeric material that is form-fitting and breathable or vapor permeable.

It is further desirable to provide an elastomeric material suitable for use in an apertured elastomeric web designed to dissociate the effects of an applied strain on the web from the edges of the apertures and hence retard or prevent the onset of tear initiation.

More particularly, in a preferred embodiment, it would be desirable to provide a macroscopically-expanded three-dimensional apertured elastomeric web that is able to substantially recover its three-dimensional shape after being subjected to an applied strain.

Furthermore, it is desirable to provide such an elastomeric material that is cost-effective for personal hygiene products and health care products, such as pull-on diapers, training pants, disposable diapers with fasteners, incontinence garments, sanitary napkins, pantiliners, wound dressings, bandages, and wraps.

## SUMMARY OF THE INVENTION

The present invention pertains to radiation crosslinked elastomeric materials with improved elevated temperature properties and lotion resistance. The elastomeric material can be used alone or with skin layers to form an elastomeric film, such as a coextruded and/or formed film. As a formed film the material of the present invention can provide a porous, macroscopically-expanded, three-dimensional, elastomeric web. In a preferred embodiment, the elastomeric web is suitable for use in elasticized or body-hugging portions of disposable absorbent articles such as side panels, waist bands, cuffs, or of health care products such as disposable diapers, dressings, bandages and wraps. The porous extensible polymeric webs of the present invention may also be used in other portions of the absorbent articles where a stretchable or breathable material is desired, such as topsheets or backsheets. The material of the present invention provides the additional benefits of improved elevated (e.g., body temperature) performance and lotion resistance.

The elastomeric material of the present invention preferably exhibits improved elastomeric properties at body temperature and under load or stress for a specified period of time, with or without lotion applied. In a preferred embodiment, the elastomeric material comprises block copolymers, such as polystyrene-butadiene-polystyrene block copolymers having a styrene content in excess of about 10 weight percent; at least one thermoplastic resin, such as vinylarene or polyolefins; and a processing oil, particularly a low viscosity hydrocarbon oil such as mineral oil. Anti-oxidants can be added as necessary.

The elastomeric material of the present invention may be processed into fibers, strands, films, including monolithic films or a multilayer films with at least one substantially less elastomeric skin layer such as polyolefin type materials, including polyethylene and polypropylene. The elastomeric films are useful in forming macroscopically-expanded, three dimensional, elastomeric webs.

Also disclosed is a method of producing an elastomeric material of the present invention comprising providing a multilayer elastomeric film, supporting the film on a forming structure, and applying a fluid pressure differential across the thickness of the multilayer film. The fluid pressure differential is sufficiently great to cause the multilayer film to conform to the supporting structure and rupture in at least portions of the formed film.

## BRIEF DESCRIPTION OF THE DRAWINGS

While the specification concludes with claims particularly pointing out and distinctly claiming the subject matter of the present invention, it is believed that the present invention will be better understood from the following description taken in conjunction with the accompanying drawings in which like reference numerals identify identical elements and wherein:

FIG. 1 is an enlarged, partially segmented, perspective illustration of a prior art polymeric web of a type generally disclosed in commonly assigned U.S. Pat. No. 4,342,314;

FIG. 2 is an enlarged, partially segmented, perspective illustration of a preferred elastomeric web of the present invention having two layers of polymer film, at least one of which is elastomeric;

FIG. 3 is a further enlarged, partial view of a web of the type generally shown in FIG. 2, but illustrating in greater detail the web construction of an alternative elastomeric web of the present invention;

FIG. 4 is an enlarged cross-sectional view of a preferred multilayer film of an elastomeric web of the present invention having an elastomeric layer interposed between two skin layers;

FIG. 5 is a plan view of aperture shapes projected in the plane of the first surface of an alternative elastomeric web of the present invention;

FIG. 6 is an enlarged cross-sectional view of an interconnecting member taken along section line 6-6 of FIG. 5;

FIG. 7 is another enlarged cross-sectional view of an interconnecting member taken along section line 7-7 of FIG. 5;

FIGS. 8A-8C are schematic representations of a cross-section of an aperture of an elastomeric web of the present invention in various states of tension;

FIG. 9 is an enlarged optical photomicrograph showing the first surface of an elastomeric web of the present invention having an ordered pattern of approximately 1 mm square apertures;

FIG. 10 is an enlarged scanning electron microscope photomicrograph perspective illustration of the second surface of the elastomeric web shown in FIG. 9 in an unstretched state;

FIG. 11 is an enlarged scanning electron microscope photomicrograph perspective illustration of the second surface of the elastomeric web shown in FIG. 9 tensioned to approximately 100% elongation;

FIG. 12 is an enlarged scanning electron microscope photomicrograph perspective illustration of an aperture of an elastomeric web of the present invention showing rugosities formed after extension and recovery;

FIG. 13 is a partially segmented perspective illustration of a disposable garment comprising the elastomeric web of the present invention;

FIG. 14 is a simplified, partially segmented illustration of a preferred embodiment of side panels for a disposable garment;

FIG. 15 is a simplified, partially exploded perspective illustration of a laminate structure generally useful for forming the web structure illustrated in FIG. 2;

FIG. 16 is a perspective view of a tubular member formed by rolling a planar laminate structure of the type generally illustrated in FIG. 15 to the desired radius of curvature and joining the free ends thereof to one another;

FIG. 17 is a simplified schematic illustration of a preferred method and apparatus for debossing and perforating an elastomeric film generally in accordance with the present invention;

FIG. 18 is an enlarged, partially segmented perspective illustration of an alternative elastomeric web of the present invention; and

FIG. 19 is an enlarged cross sectional illustration of the web of FIG. 18 taken along section line 19-19.

## DETAILED DESCRIPTION OF THE PRESENT INVENTION

As used herein, the term "comprising" means that the various components, ingredient, or steps can be conjointly employed in practicing the present invention. Accordingly, the term "comprising" encompasses the more restrictive terms "consisting of" and "consisting essentially of".

As used herein, the terms "elastic" or "elastomeric" refer to any material which is capable of being elongated or deformed under an externally applied force, and which will substantially resume its original dimension or shape, sustaining only small permanent set (typically no more than about 20%), after the external force is released. The term "elastomer" refers to any material exhibiting elastic properties as described hereinabove.

As used herein, the term "thermoplastic" refers to any material which can be melted and resolidified with little or no change in physical properties (assuming a minimum of oxidative degradation).

As used herein the term "skin layer" refers to a layer of any thermoplastic polymer or polymeric blend that is substantially less elastomeric than the elastomeric layer. The skin layer is considered "substantially less elastomeric" if the permanent set of the skin layer is at least about 20% greater than that of the elastomeric layer. Permanent set refers to the deformation of a material measured in a sufficient time after the material is released from a specific elongation to allow the material to snap back fully.

As used herein, the term "percent elongation" refers to the difference between the length of an elastomeric material measured while the material is elongated under an applied force and the length of the material in its undeformed or unstrained state, dividing by the length of the material in its undeformed state, then multiplying by 100. For example, a material in its undeformed or unstrained state has a 0% elongation.

As used herein, the terms "set" or "percent set" refer to the percent deformation of an elastomeric material measured while the material is in a relaxed condition for a specified period of time (i.e., 60 seconds for the Test Methods described herein) after the material was released from a specified elongation without allowing the material to snap back completely. The percent set is expressed as [(zero load extension after one cycle - initial sample gauge length of cycle 1) /(initial sample gauge length of cycle 1)] x 100. Zero load extension refers to the distance between the jaws at the beginning of the second cycle before a load is registered by the tensile testing equipment.

As used herein, the term "stress relaxation" refers to the percentage loss of tension or load between the maximum load or force encountered after elongating an elastomeric material at a specific rate of extension to a predetermined length (or the load or force measured at some initial length) and the remaining load or force measured after the sample has been held at that length or elongation for a specified period of time. Relaxation is expressed as percentage loss of the initial load encountered at a specific extension of an elastomeric material.

As used herein, the term "hysteresis" refers to the difference between the energy required to elongate the elastomeric material to the energy retained by the elastomeric material before retraction from a specified elongation. Stretching an elastomeric material sample to a specified elongation, typically 200% elongation, and returning to zero load completes a hysteresis loop.

Other terms are defined herein where initially discussed.

A preferred embodiment of an elastomeric material suitable for use in a disposable absorbent article is now described with reference to the Figures. While the preferred embodiment comprises a macroscopically-expanded, three-dimensional, fluid pervious polymeric web, the invention is not to be so limited. The material disclosed herein may find equally suitable usefulness as a monoplanar web, a fiber, including a fiber component of a fibrous nonwoven web, a strand, and may be a bicomponent fiber (or "conjugate" fiber). A web of the material disclosed herein may be formed a planar, fluid impervious film, an apertured flat film, a slit film, or other suitably modified thin film suitable for use in disposable absorbent articles. Fibers; strands and planar webs (or "sheets") of the material may be produced by methods known in the art for processing elastomeric materials. Three-dimensional, formed films, including coextruded formed films can be produced by the methods disclosed herein.

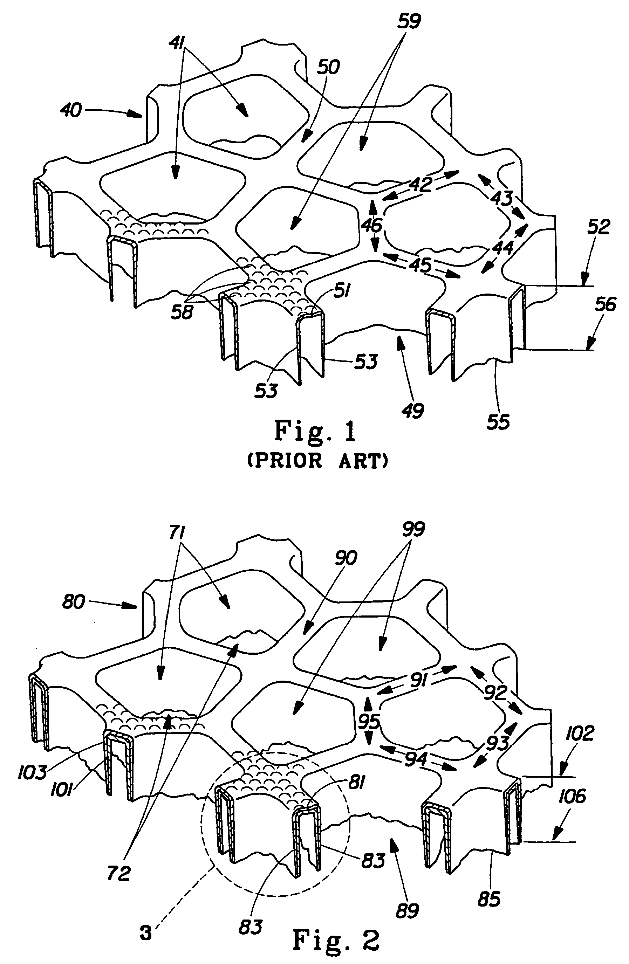

FIG. 1 is an enlarged, partially segmented, perspective illustration of a prior art macroscopically-expanded, three-dimensional, fiber-like, fluid pervious polymeric web 40 which has been found highly suitable for use as a topsheet in disposable absorbent articles, such as diapers and sanitary napkins. The prior art web is generally in accordance with the teachings of commonly assigned U.S. Pat. No. 4,342,314 issued to Radel et al. on Aug. 3, 1982. The fluid pervious web **40** exhibits a multiplicity of apertures, e.g., apertures **41,** which are formed by a multiplicity of interconnected fiber-like elements, e.g., fiber-like elements **42, 43, 44, 45,** and **46** interconnected to one another in the first surface **50** of the web. Each fiber-like element comprises a base portion, e.g., base portion **51,** located in plane **52** of the first surface **50.** Each base portion has a sidewall portion, e.g., sidewall portion **53,** attached to each edge thereof. The sidewall portions extend generally in the direction of the second surface **55** of the web. The intersecting sidewall portions of the fiber-like elements are interconnected to one another intermediate the first and second surfaces of the web, and terminate substantially concurrently with one another in the plane **56** of the second surface **55.**

In a preferred embodiment, the base portion **51** includes a microscopic pattern of surface aberrations **58** generally in accordance with the teachings of U.S. Pat. No. 4,463,045, issued to Ahr et al. on July 31, 1984. The microscopic pattern of surface aberrations **58** provides a substantially non-glossy visible surface when the web is struck by incident light rays.

In an alternative embodiment the prior web may include a multiplicity of much smaller capillary networks (not shown) in the first surface **50** of the web, as taught by U.S. Pat. No. 4,637,819 to Ouellette et al. issued Jan. 20, 1987. It is believed that the additional porosity afforded by the smaller fluid-handling capillary networks may allow the web of the present invention function more efficiently when used as an extensible, porous portion of a disposable absorbent article.

As utilized herein, the term "interconnecting members" refers to some or all of the elements of the elastomeric web, portions of which serve to define the primary apertures by a continuous network. Representative interconnecting members include the fiber-like elements of the aforementioned '314 Radel et al. patent and commonly assigned U.S. Patent No. 5,514,105 to Goodman, Jr., et al. issued on May 7, 1996.

As can be appreciated from the following description and drawings, the interconnecting elements are inherently continuous, with contiguous interconnecting elements blending into one another in mutually-adjoining transition portions.

Individual interconnecting members can best be generally described, with reference to FIG. 1, as those portions of the elastomeric web disposed between any two adjacent primary apertures, originating in the first surface **50** and extending to the second surface **55.** On the first surface of the web the interconnecting members collectively form a continuous network, or pattern, the continuous network of interconnecting members defining the primary apertures, and on the second surface of the web the interconnecting sidewalls of the interconnecting members collectively form a discontinuous pattern of secondary apertures.

As utilized herein, the term "continuous", when used to describe the first surface of the elastomeric web, refers to the uninterrupted character of the first surface, generally in the plane of the first surface. Thus, any point on the first surface can be reached from any and every other point on the first surface without substantially leaving the first surface in the plane of the first surface. Likewise, as utilized herein, the term "discontinuous," when used to describe the second surface of the elastomeric web, refers to the interrupted character of the second surface, generally in the plane of the second surface. Thus, any point on the second surface cannot be reached from every other point on the second surface without substantially leaving the second surface in the plane of the second surface.

In general, as utilized herein the term "macroscopic" is used to refer to structural features or elements which are readily visible to a normal human eye when the perpendicular distance between the viewer's eye and the plane of the web is about 12 inches. Conversely, the term "microscopic" is utilized to refer to structural features or elements which are not readily visible to a normal human eye when the perpendicular distance between the viewer's eye and the plane of the web is about 30.48 cm (12 inches).

As utilized herein, the term "macroscopically-expanded", when used to describe three-dimensional elastomeric webs, ribbons and films, refers to elastomeric webs, ribbons and films which have been caused to conform to the surface of a three-dimensional forming structure so that both surfaces thereof exhibit the three-dimensional pattern of the forming structure. Such macroscopically-expanded webs, ribbons and films are typically caused to conform to the surface of the forming structures by embossing (i.e., when the forming structure exhibits a pattern comprised primarily of male projections), by debossing (i.e., when the forming structure exhibits a pattern comprised primarily of female capillary networks), or by extrusion of a resinous melt onto the surface of a forming structure of either type.

By way of contrast, the term "planar" when utilized herein to describe plastic webs, ribbons and films, refers to the overall general condition of the web, ribbon or film when viewed by the naked eye on a macroscopic scale. For example, a non-apertured extruded film or an apertured extruded film that does not exhibit significant macroscopic deformation out of the plane of the film would generally be described as planar. Thus, for an apertured, planar web the edge of the material at the apertures is substantially in the plane of the web, causing applied web stresses in the plane of the web to be coupled directly to tear initiation sites at the apertures.

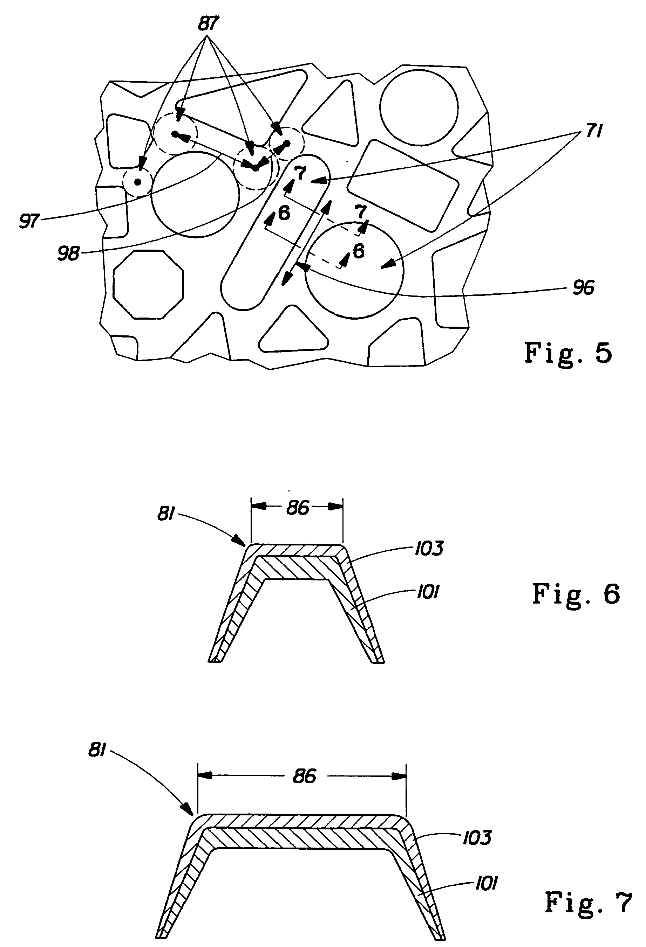

When macroscopically-expanded, the multilayer film of the elastomeric web of the present invention is formed into three-dimensional interconnecting members which may be described as channel-like. Their two-dimensional cross-section may also be described as "U-shaped", as in the aforementioned Radel et al. patent, or more generally as "upwardly concave-shaped", as disclosed in the aforementioned Goodman, Jr., et al. patent. "Upwardly concave-shaped" as used herein describes the orientation of the channel-like shape with relation to the surfaces of the elastomeric web, with the base generally in the first surface, and the legs of the channel extending from the base in the direction of the second surface, and with the channel opening being substantially in the second surface. In general, as described below with reference to FIG. 5, for a plane extending through the web orthogonal to the plane of the first surface and intersecting any two adjacent primary apertures, the resulting cross-section of an interconnecting member disposed between will exhibit a generally upwardly concave shape that may be substantially U-shaped.

One drawback associated with prior art macroscopically-expanded, three-dimensional, fluid pervious polymeric webs is that despite their superior breathability and fluid handling characteristics, they are not generally elastic enough to be used in the high-stretch portions of disposable absorbent articles, such as waistbands and leg cuffs. Non-apertured planar elasticized polymeric webs that do exhibit suitable extensibility for use on disposable absorbent articles have drawbacks as well. In particular, non-apertured planar elasticized polymeric webs do not have adequate porosity for use in body-contacting portions of an absorbent article.

Several means of rendering non-apertured planar elasticized polymeric webs more porous are known in the art, such as die punching, slitting, and hot-pin melt aperturing. However, when any of the above techniques is applied to thermoplastic elastomeric films, the increase in porosity is typically accompanied by a decrease in the degree of reliable elastic performance. Once perforated by conventional methods the edges of the apertures become sources of tear initiation sites as forces are applied to the web since they lie in the plane of applied stress. For common thermoplastic elastic films, web stress will initiate tears at the apertures which propagate over time leading to catastrophic failure of the film. If the aperture shapes are non-round, e.g., square, triangular, or other polygons, potential for tear initiation increases due to the stress concentrations at the angular intersection of sides.

It has been discovered that if a planar elastomeric web can be formed into a macroscopically-expanded, three-dimensional, fluid pervious web, generally in accordance with the teachings of the aforementioned '314 Radel et al. patent, the resulting three-dimensional elastomeric web exhibits the advantages of high porosity and high elasticity, as well as reliability, and high strength. Such an improvement is disclosed in the aforementioned copending US patent application S.N. 08/816,106 entitled Tear Resistant Porous Extensible Web, filed March 14, 1997 in the name of Curro et al. (hereinafter Curro '106). The Curro invention utilizes a multilayer polymeric web comprising an elastomeric layer in combination with at least one skin layer, and forming the multilayer web into a macroscopically-expanded, three-dimensional configuration.

The material of the present invention is an improvement over the elastomeric material disclosed in the aforementioned Curro '106 invention, and in particular improves the lotion resistance of the resulting web, and improves the body temperature performance of the web. These improvements are achieved in a cost effective material solution that involves the formulation and post treatment of the constituent elastomeric layer. A preferred formulation comprises block copolymers and a preferred post treatment comprises cross-linking, the preferred method being by electron beam radiation.

Preferably, the elastomeric layer itself is capable of undergoing from 50% to 1500% elongation at room temperature when in a non-apertured, planar condition, with the maximum being before crosslinking, and the elongation decreasing proportionally with the level of electron beam radiation. The elastomer can be either pure elastomers or a blend with an elastomeric phase or content that will still exhibit substantial elastomeric properties at ambient temperatures, including human body temperatures.

The skin layer of the present invention is preferably thinner and substantially less elastic than the elastomeric layer, and may in the limiting case be generally inelastic. There may be more than one skin layer used in conjunction with the elastomeric layer of the present invention, and it, or they, will generally modify the elastic properties of the elastomer. If more than one skin layer is used, the skin layers may have the same or different material characteristics.

FIG. 2 is an enlarged partially segmented, perspective illustration of a macroscopically-expanded, three-dimensional, elastomeric web embodiment of the present invention, generally indicated as **80.** The geometrical configuration of the fluid-pervious, elastomeric web **80** is generally similar to that of prior art web **40,** illustrated in FIG. 1, and is generally in accordance with the teachings of the aforementioned '314 Radel et al. patent. Other suitable formed film configurations are described in U.S. Pat. No. 3,929,135, issued to Thompson on Dec. 30, 1975; U.S. Pat. No. 4,324,246 issued to Mullane, et al. on April 13, 1982; and U.S. Pat. No. 5,006,394 issued to Baird on April 9, 1991.

A preferred embodiment of an elastomeric web **80** of the present invention exhibits a multiplicity of primary apertures, e.g., primary apertures 71, which are formed in plane 102 of the first surface 90 by a continuous network of interconnecting members, e.g., members 91, 92, 93, 94, 95 interconnected to one another. The shape of primary apertures 71 as projected on the plane of the first surface 90 are preferably in the shape of polygons, e.g., squares, hexagons, etc., in an ordered or random pattern. In a preferred embodiment each interconnecting member comprises a base portion, e.g., base portion 81, located in plane 102, and each base portion has a sidewall portion, e.g., sidewall portions 83, attached to each edge thereof. The sidewall portions 83 extend generally in the direction of the second surface 85 of the web and intersect with side walls of adjoining interconnecting members. The intersecting sidewall portions are interconnected to one another intermediate the first and second surfaces of the web, and terminate substantially concurrently with one another to form a secondary aperture, e.g., secondary apertures 72 in the plane 106 of the second surface 85. Detailed description of the porous macroscopically-expanded, three-dimensional elastomeric web is disclosed in aforementioned Curro '106 patent application.

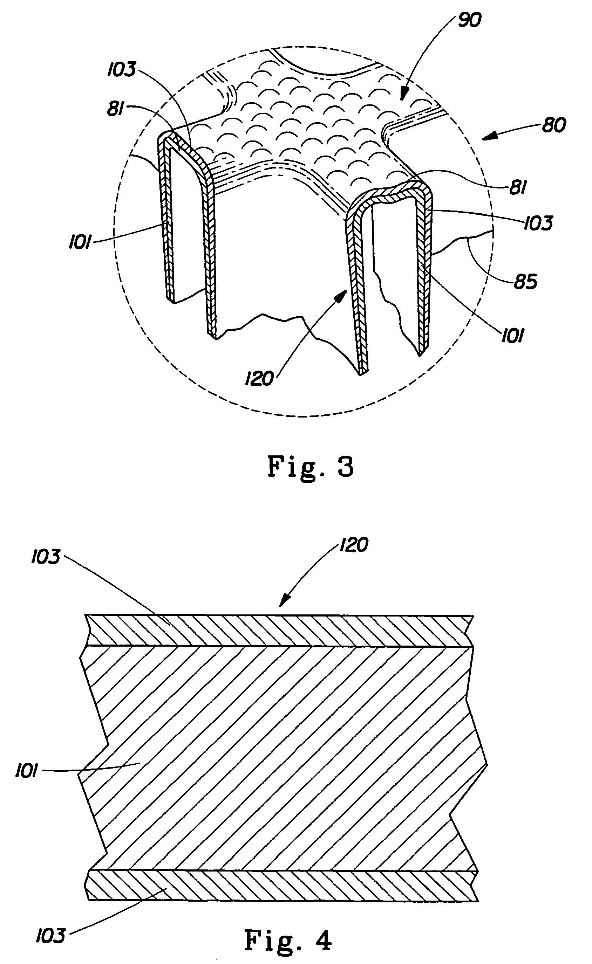

FIG. 3 is a further enlarged, partial view of a web of the type generally similar to web **80** of FIG. 2, but illustrating an alternative web construction according to the present invention. The multilayer polymeric formed film **120** of web **80** is preferably comprised of at least one elastomeric layer **101,** and at least one skin layer **103.** While FIG. 3 shows a two-layer embodiment with the skin layer **103** nearer the first surface **90,** it is believed that the order of layering of the formed film **120** is not limiting. While it is presently preferred that as shown in FIG. 3 the polymeric layers terminate substantially concurrently in the plane of the second surface, it is not presently believed to be essential that they do so, i.e., one or more layers may extend further toward the second surface than the others. The elastomeric layer comprises from about 20% to about 95% of the total thickness of the film and each skin layer comprises from about 1 % to about 40% of the total thickness of the film. Typically, the elastomeric film has a thickness of from 12,7 $\mu$m to 254 $\mu$m (about 0.5 mils to about 20 mils) preferably from about 25,4 $\mu$m to 127 $\mu$m (1.0 mil to 5.0 mils). Each skin layer is typically 1,27 $\mu$m to 127 $\mu$m (about 0.05 mil to about 5 mils) thick, and preferably from 2,54 $\mu$m to 38.1 $\mu$m (about 0.1 mil to about 1.5 mils) thick. In one embodiment, the elastomeric layer is 81.28 $\mu$m (about 3.2 mils) thick and each skin layer is 3.81 $\mu$m (about 0.15 mil) thick.

A particularly preferred multilayer polymeric film **120** of the web **80** is depicted in cross-section in FIG. 4, showing an elastomeric layer **101** interposed between two skin layers **103.** The elastomeric layer 101 preferably comprises a thermoplastic elastomer having at least one elastomeric portion and at least one thermoplastic portion. The thermoplastic elastomer typically comprises a substantially continuous amorphous matrix, with glassy or crystalline domains interspersed throughout. Not intending to be bound by theory, it is believed that the discontinuous domains act as effective physical crosslinks and hence enabling the material to exhibit an elastic memory when the material is subjected to an applied strain and subsequently released. Preferred thermoplastic elastomeric materials include block copolymers and blends thereof. The thermoplastic elastomeric materials suitable for use in the present invention include styrene-butadiene-styrene or other such common styrenic block copolymers. The skin layers preferably comprise substantially less elastomeric materials such as polyolefins having densities greater than about 0.90 g/cc, which are capable of thermoplastic processing into thin films. The skin layer should have sufficient adhesion to the elastomeric layer such that it will not completely delaminate either before or after stretching of the web. The materials suitable for use herein as the skin layer should have the desired melt flow properties such that it can be successfully processed with the elastomeric layer to form a multilayer film. A preferred method to produce the multilayer polymeric film **120** is coextrusion.

In general, an elastomeric material of the present invention with desired elastic and stress relaxation properties may be prepared from a composition which comprises at least one elastomeric block copolymer, an optional thermoplastic polymer and a low viscosity processing oil. A preferred composition comprises about 55 wt% of a styrenic-olefinic triblock copolymer, about 15 wt% of polystyrene, and about 30 wt% of mineral oil. The compositions may further include other additives such as antioxidants, anti-block agents and anti-slip agents. Typically the antioxidants are no more than 1%, preferably no more than 0.5% of the total weight of the elastomeric compositions.

A number of block copolymers can be used to prepare the elastomeric compositions useful in preparing the low stress relaxation elastomeric film, fiber, strand or sheet of the present invention. Linear block copolymers, such as A-B-A triblock copolymers, A-B-A-B tetrablock copolymers, A-B-A-B-A pentablock copolymers, or the like, are suitably selected on the basis of endblock content and endblock average molecular weight. Such block copolymers generally comprise an elastomeric block portion B and a thermoplastic block portion A. The block copolymers suitable for use herein generally have a three-dimensional physical crosslinked or entangled structure below the glass transition temperature ($T_g$) of the thermoplastic block portion. The block copolymers suitable for use herein are thermoplastic and elastomeric. The block copolymers are thermoplastic in the sense that they can be melted above the endblock $T_g$, formed, and resolidified several times with little or no change in physical properties (assuming a minimum of oxidative degradation).

In such copolymers, the block portion A are the hard blocks and are derived from materials which have a sufficiently high glass transition temperature to form crystalline or glassy domains at the use temperature of the polymer. Such hard blocks generally form strong physical entanglements or agglomerates with other hard blocks in the copolymers. The hard block portion A comprises a polyvinylarene derived from monomers such as styrene, $\alpha$-methyl styrene, other styrene derivatives, or mixtures thereof. The hard block portion A preferably is polystyrene, having a number-average molecular weight between from about 1,000 to about 200,000, preferably from about 2,000 to about 100,000, more preferably from about 5,000 to about 60,000. Typically the hard block portion A comprises from about 10% to about 80%, preferably from about 20% to about 50%, more preferably from about 25 to about 35% of the total weight of the copolymer.

The material forming the B-block will have sufficiently low glass transition temperature at the use temperature of the polymer such that crystalline or glassy domains are not formed at these working temperatures. The B-block is thus regarded as a soft block. The soft block portion B is typically an olefinic polymer derived from conjugated aliphatic diene monomers of from about 4 to about 6 carbon atoms or linear alkene monomers of from about 2 to about 6 carbon atoms. Suitable diene monomers include butadiene, isoprene, and the like. Suitable alkene monomers include ethylene, propylene, butylene, and the like. The soft block portion B preferably comprises a substantially amorphous polyolefin such as ethylene/propylene polymers, ethylene/butylene polymers, polyisoprene, polybutadiene; and the like or mixtures thereof, having a number-average molecular weight from about 1,000 to about 300,000, preferably from about 10,000 to about 200,000, and more preferably from about 20,000 to about 100,000. Typically the soft block portion B comprises from about 20% to about 90%, preferably from about 50% to about 80%, more preferably from about 65% to about 75% of the total weight of the copolymer.

Particularly suitable block copolymers for use in this invention comprise at least one substantially elastomeric midblock portion B and at least two substantially thermoplastic endblock portions A. Also suitable for use herein are triblock copolymers having thermoplastic endblocks A and A', wherein A and A' may be derived from different vinylarene monomers. The olefin block typically comprises at least about 50 percent by weight of the block copolymer. The unsaturation in olefinic double bonds may be selectively hydrogenated. For example, a polyisoprene block can be selectively reduced to form an ethylene-propylene block. The vinylarene block typically comprises at least about 10 percent by weight of the block copolymer. However, higher vinylarene content is more preferred for high elastic and low stress relaxation properties. The block copolymers may also be radial, having three or more arms, each arm being an B-A, B-A-B-A, or the like type copolymer and the B blocks being at or near the center portion of the radial polymer. Good results may be obtained with, for example, four, five, or six arms.

The block copolymer may be used in the elastomeric composition of the present invention in an amount effective to achieve the desired initial elastic and stress relaxation properties. The block copolymer will generally be present in the elastomeric composition in an amount from 20 to 80 weight percent, preferably from about 30 to about 70 weight percent, and more preferably from about 40 to about 60 weight percent of the elastomeric composition.

Suitable for use in the present invention are styrene-olefin-styrene triblock copolymers such as styrene-butadiene-styrene (S-B-S), styrene-ethylene/butylene-styrene (S-EB-S), styrene-ethylene/propylene-styrene (S-EP-S), styrene-isoprene-styrene (S-1-S), and mixtures thereof. The block copolymers may be employed alone, in a blend of block copolymers, or in a blend of one or more block copolymers with one or more thermoplastic polymers such as polystyrene, poly($\alpha$-methyl styrene), polypropylene, polyethylene, polybutylene, polyisoprene, copolymers of ethylene with various monomers as known in the art, or mixtures thereof. The block copolymers employed preferably only have minor quantities of, and most preferably essentially no, such other polymers present.

Particularly preferred block copolymers for use herein are polystyrene-butadiene-polystyrene block copolymers having a styrene content in excess of about 10 weight percent. With higher styrene content, the polystyrene endblock portions generally have a relatively high molecular weight. Such linear block copolymers of styrene-butadiene-styrene (S-B-S) are commercially available under the trade designation KRATON® D series from the Shell Chemical Company, Huston, TX, and copolymers marketed under the trade name VECTOR® by Dexco Polymers, Houston, TX. All the styrenic-olefinic block copolymers described herein are suitable for use in the elastomeric materials of the present invention either alone or in mixtures thereof.

Various thermoplastic polymers may be used in the elastomeric material of the present invention. Suitable thermoplastic polymers can associate with either the hard blocks or the soft blocks of the block copolymers to form an entangled three-dimensional network. Thermoplastic polymers such as polyphenylene oxide, and polyvinylarenes including polystyrene, poly($\alpha$-methyl styrene), polyvinyl toluene, and the like, are useful in the present invention. These polymers are chemically compatible with the styrenic hard blocks of the block copolymer. Thermoplastic polymers such as polyethylene, polypropylene, copolymers of olefins such as copolymers of ethylene with propylene, 1-butene, 1-hexane, 1-octene, vinylacetate, methacrylate, acrylic acid, and the like are also useful in the present invention. These polymers are chemically compatible with the olefinic soft blocks of the block copolymers. It is believed to be advantageous for the components to be compatible with either the hard blocks or the soft blocks of the block copolymer such that they may more easily form an entangled three-dimensional network structure, and they do not physically separate to a significant extent from the network structure.

The thermoplastic polymers or resin blends are in an amount from 3 to 60 weight percent, preferably from about 5 to about 40 weight percent, and more preferably from about 10 to about 30 weight percent of the low stress relaxation elastomeric composition used in the present invention.

Even though both end block associating polymers such as polystyrene, low molecular weight aromatic hydrocarbon resins and soft block associating polymers such as polypropylene or polyethylene may provide lower melt viscosity and promote processability of the composition, it has been found that additional processing aid such as a hydrocarbon oil, is beneficial for further lowering the viscosity and enhancing processability. The oil decreases the viscosity of the elastomeric composition such that the elastomeric composition becomes more processable. However, the processing oil tends to decrease the elastomeric retention and tensile properties of the compositions. The processing oil is present in an amount of from 5 to 60 wt%, preferably from about 10 to about 50 wt%, and more preferably from about 15 to about 45 wt% of the elastomeric compositions.

In a preferred embodiment, the processing oil is compatible with the composition, and is substantially non-degrading at the processing temperature. Suitable for use herein are hydrocarbon oils which may be linear, branched, cyclic, aliphatic or aromatic. Preferably the processing oil is a white mineral oil available under the tradename BRITOL® from Witco Company, Greenwich, CT. Also preferred as the processing oil is another mineral oil under the tradename DRAKEOL® from Pennzoil Company Penrenco Division, Karns City, PA.

In general, an elastomeric composition with desirable elastic properties may be prepared from a composition that comprises essentially only a block copolymer. However, such a composition will generally be very difficult to process because of high viscosity and high stretchy and tacky nature of the composition. In addition, the inherent tackiness of the elastomeric composition makes it difficult to handle. For example, the composition may be processed into a film which tends to stick to the processing equipment and is difficult to remove from the equipment, or when the composition have been processed and wound up, it tends to fuse together and becomes very difficult to unwound for further processing into the finished product.

It is found that blending the neat block copolymer with other thermoplastic polymers as well as processing oils improves the processability and handling of the composition. The thermoplastic polymers and processing oil tend to reduce the viscosity of the composition and provide improved processability of the composition. To further improve the processability and handling of the composition, especially when a film of such elastomeric composition is desired, at least one skin layer of a substantially less elastomeric material may be coextruded with the elastomeric composition. In a preferred embodiment, the elastomeric composition is coextruded with thermoplastic compositions to provide an elastomeric center layer between two skin layers, each being substantially joined to one side of the center layer. The two skin layers may be the same or different thermoplastic materials.

One drawback to elastomeric composition comprised of block copolymers is that the web can degrade when combined with a lotion, for example a skin care lotion applied to the surface of the web to protect or enhance skin condition or skin health. As used herein, the terms "lotions" and "skin care compositions" refer to substantially oleaginous compositions. Representative lotions are described in U.S. Patent No. 5,607,760 issued March 4, 1997; U.S. Patent No. 5,609,587 issued, March 11, 1997; U.S. Patent No. 5,635,191 issued June 3, 1997; and U.S. Patent No. 5,643,588 issued July 1, 1997, and in co-pending U.S. Patent Application Serial Nos. 09/041,509, 09/041,232 and 09/041,266, each filed on March 12, 1998; U.S. Patent Application Serial No. 09/316,691, filed May 21, 1999; U.S. Patent Application Serial No. 09/407,950, filed September 28, 1999; and U.S. Patent Application Serial No. 09/466,343, filed December 17, 1999. Without being bound by theory, it is believed that certain components of the lotion, particularly the petroleum-based components and/or other emollient components that can be partly soluble in or plasticize the thermoplastics and/or block copolymers of the elastomeric composition. If the lotions come into sufficient contact with the elastomeric layer of an elastomeric web, the elastic performance of the web can be significantly degraded.

The degradation of the elastic performance limits the web's usefulness in applications such as components of disposable absorbent articles. To prevent premature degradation of the elastomeric web of the present invention, it has been discovered that by cross-linking the elastomeric web the web exhibits a significant improvement in lotion degradation resistance. As further shown below, the beneficial increase in lotion resistance is accompanied by an increase in the body-temperature elastic performance of the material. Therefore, the material of the present invention provides for at least two benefits as an elastic component in disposable absorbent articles, both of which alone are a significant improvement over the prior art.

Crosslinking of the block copolymer material is accomplished by exposing the finished material (e.g., film, tape, or fiber) to irradiation by radiation methods known in the art. The source of radiation is preferably an electron beam generator, but in principle a gamma radiation source may be used also. The radiation intensity applied may vary, depending in part on the thickness of the film. Radiation is measured in rads, and can be expressed in megarads (Mrads). A suitable radiation dosage for flat films having a basis weight of about 70 grams per square meter (gsm) generally appears to be between 0 and 35 Mrad, and can be between about 1 and 25 Mrad, and is currently preferably about 3 and 15 Mrad.

The material may be exposed to radiation at reduced, elevated or atmospheric pressure under various purging gases, including air, nitrogen, argon, and may be carried out at room temperature or at a reduced or elevated temperature. It is believed that pressure and temperature need only be chosen so as not to disturb material physical properties. For example, the process of irradiating the material should be carried out below the melting point of the film itself. The irradiation can be done by passing the article under a radiation source or between two or more radiation sources. The irradiation can be done as a batch process, one item at a time, or it may be carried out continuously as in continuous web processing.

The radiation source is preferably an electron beam donor, but, as noted above, in principle a gamma radiation source may be used also. In a typical e-beam process electrons are generated when high voltage is applied to tungsten wire filaments inside a vacuum chamber. The filaments are heated electrically, glow white hot and generate a cloud of electrons. Electrons are then drawn from the cloud to areas of lesser voltage at extremely high speeds. After exiting the vacuum chamber through titanium foil they penetrate the web materials, effecting crosslinking.

Depending on design, the e-beam radiation can be either a batch process or a continuous process for fibers, nonwoven webs made from fibers, or film web process. For batch processing web materials, the web materials are placed inside a chamber, and electron beams are accelerated toward the web surface and penetrate the web. After a sufficient amount of radiation has penetrated the web, the radiation is stopped and the web material is removed. In general, it is believed that continuous processing methods are primarily beneficial for web materials, which includes both nonwoven webs and film webs. For continuous processing, a curtain of electron beams are generated at high speed as web materials are passed through at a uniform speed. Various methods are known in the art for such batch and continuous web processing. Electron beam treatment may also be carried out in line with the material production, so that it is not necessary to produce the material separate from the crosslinking process.

The level of crosslinking induced in the material depends primarily on the radiation dosage and depth of penetration. Dosage can be defined as the amount of energy deposited on the material. The units of dosage are usually rads, or more commonly, megarads (Mrads). The dosage can be formulated as:

$$Dosage = K*I/S$$

where

D = dosage (Mrads)
K = e-beam system yield
I = electron current (mA)
S = web speed (m/min)

The depth of penetration is determined by the voltage. Higher voltages will generate higher speed of electrons for deeper penetration. For certain web thicknesses, electron voltage is normally fixed at predetermined values for optimal penetration and electron current is also fixed at predetermined values depending on the treatment level (dose) and desired web speed. A currently preferred continuous web e-beam apparatus and process can be obtained from Energy Sciences, Inc. of Wilmington, Mass.

The skin layer is preferably at least partially compatible or miscible with a component of the elastomeric block copolymers such that there is sufficient adhesion between the center elastomeric layer and the skin layer for further processing and handling. The skin layer may comprise thermoplastic polymers or blends of thermoplastic polymers and elastomeric polymers such that the skin layer is substantially less elastomeric than the center elastomeric layer. Typically, the permanent set of the skin layer is at least about 20%, preferably at least about 30%, more preferably at least about 40% greater than that of the elastomeric center layer. Thermoplastic polymers suitable for use as the skin layer may be a polyolefin derived from monomers such as ethylenes, propylenes, butylenes, isoprenes, butadienes, 1,3-pentadienes, $\alpha$-alkenes including 1-butenes, 1-hexenes, and 1-octenes, and mixtures of these monomers, an ethylene copolymers such as ethylene-vinylacetate copolymers (EVA), ethylene-methacrylate copolymers (EMA), and ethylene-acrylic acid copolymers, a polystyrene, a poly($\alpha$-methyl styrene), a polyphenylene oxide, and blends thereof. Additionally, tie layers may be used to promote adhesion between the center elastomeric layer and the thermoplastic skin layer.

FIG. 5 is a plan view of alternative primary aperture shapes projected in the plane of the first surface of an alternative elastomeric web of the present invention. While a repeating pattern of uniform shapes is preferred, the shape of primary apertures, e.g., apertures **71**, may be generally circular, polygonal, or mixed, and may be arrayed in an ordered pattern or in a random pattern. Although not shown, it is understood that the projected shape may also be elliptical, teardrop shaped, or any other shape, that is, the present invention is believed to be aperture-shape independent.

The interconnecting elements are inherently continuous, with contiguous interconnecting elements blending into one another in mutually-adjoining transition zones or portions, e.g., transition portions **87,** shown in FIG. 5. In general, transition portions are defined by the largest circle that can be inscribed tangent to any three adjacent apertures. It is understood that for certain patterns of apertures the inscribed circle of the transition portions may be tangent to more than three adjacent apertures. For illustrative purposes, interconnecting members may be thought of as beginning or ending substantially at the centers of the transition portions, such as interconnecting members **97** and **98.** Likewise, the sidewalls of the interconnecting members can be described as interconnecting to sidewalls of contiguous interconnecting members at areas corresponding to points of tangency where the inscribed circle of the transition portion is tangent to an adjoining aperture.

Exclusive of the transition zones, cross-sections transverse to a center line between the beginning and end of interconnecting members are preferably of generally uniform U-shape. However, the transverse cross-section need not be uniform along the entire length of the interconnecting member, and for certain aperture configurations it will not be uniform along most of its length. For example, as can be understood from the sectional illustrations of FIG. 5, for interconnecting member **96,** the width dimension, **86,** of the base portion **81** may vary substantially along the length of the interconnecting member. In particular, in transition zones or portions **87,** interconnecting members blend into contiguous interconnecting members and transverse cross-sections in the transition zones or portions may exhibit substantially non-uniform U-shapes, or no discernible U-shape.

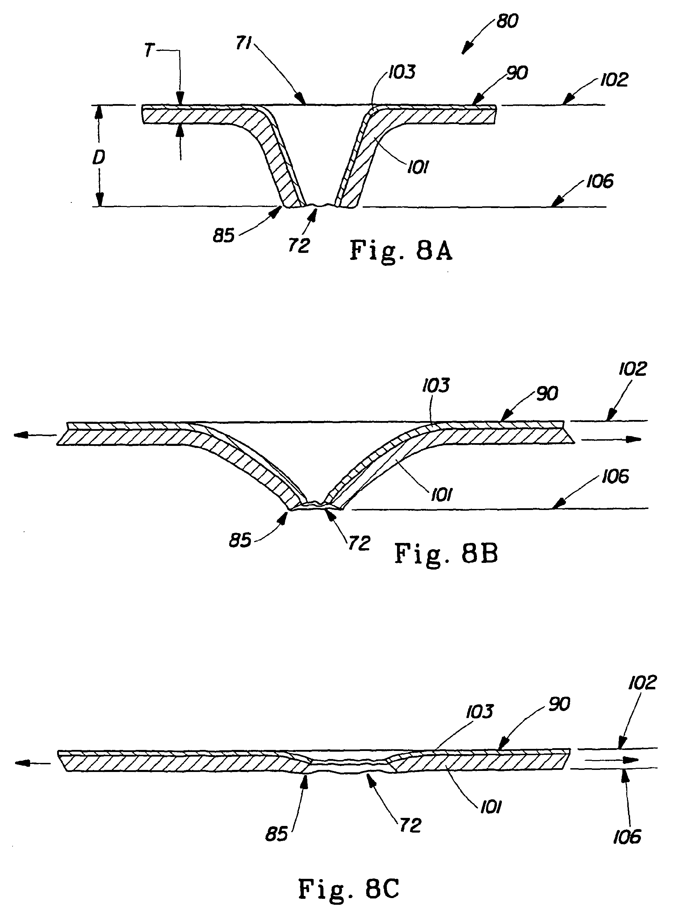

Without wishing to be bound by theory, it is believed that the web of the present invention is more reliable (i.e., resistant to catastrophic failure) when subjected to strain-induced stress due to the mechanism depicted schematically in cross section in FIGs. 8A-8C and pictorially in photomicrographs 9 -11. FIG. 8A shows a primary aperture **71** in plane **102** of first surface **90,** and a secondary aperture **72** in plane **106** of second surface **85,** remote from plane **106** of first surface **90,** of web **80** in an unstressed condition. When web **80** is stretched in the direction generally shown by arrows in FIG. 8B, first surface **90** is strained, and primary aperture **71** is likewise strained into a deformed configuration. However, the perimeter of primary aperture **71** is formed by the interconnecting members in a continuous first surface. Therefore, aperture **71** has no "edges" for tear initiation sites to compromise the elastic reliability of the web. The edges of the secondary aperture **72,** being possible tear initiation sites, do not experience appreciable strain-induced stresses until the web is strained to the point where plane **102** is no longer remote from plane **106** of the first surface **90,** as depicted in FIG. 8C. At the point where planes **102** and **106** are no longer remote, web **80** begins to behave essentially as a planar, apertured web.

It is instructive to consider the ratio of overall web depth, "D" in FIG. 8A, to film thickness, "T" in FIG. 8A of an unstretched elastomeric web. This ratio of D/T may be termed the draw ratio, as it pertains to the amount of film drawn out of the plane of the first surface due to the forming process of the present invention. Applicant believes that, in general, an increase in the draw ratio serves to increase resistance to tear by placing the second surface more remote from the first surface.

Without wishing to be bound by theory, it is believed that when the web **80** is strained or stretched, the elastomeric layer **101** of the present invention allows the base **81** of the interconnecting members forming a continuous web in the continuous first surface **90** to stretch. Skin layer **103** helps maintain the three-dimensional nature of the web, despite the applied stress, allowing the strain on the continuous first surface **90** and the resulting deformation of primary apertures **71** to be at least partially dissociated from the discontinuous second surface thereby minimizing strain at secondary apertures **72.** Therefore the strain-induced stress at the continuous first surface of the web is substantially decoupled from potential strain-induced stress at tear initiation sites on the discontinuous second surface, at least until the secondary apertures begin to enter the plane of the first surface. This substantial dissociation, or decoupling, of the strain-induced stress of the web from strain-induced stress at the secondary apertures significantly increases web reliability by allowing repeated and sustained strains of the web up to about 100%, 200%, 300%, 400% or more without failure of the web due to tear initiation at the apertures.

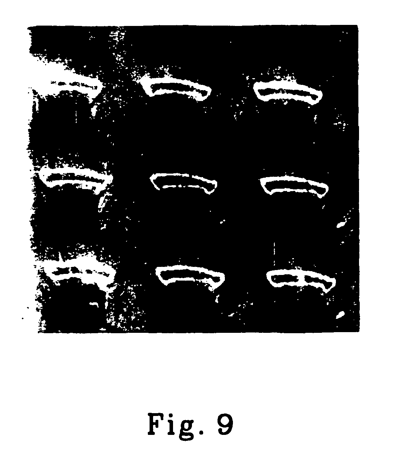

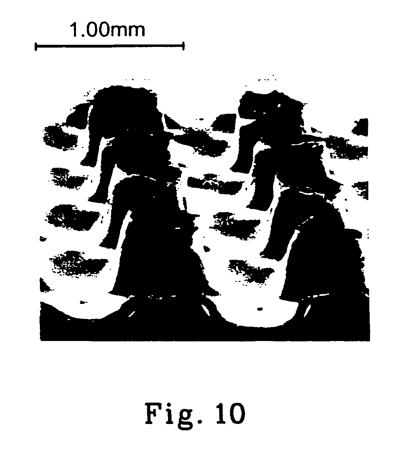

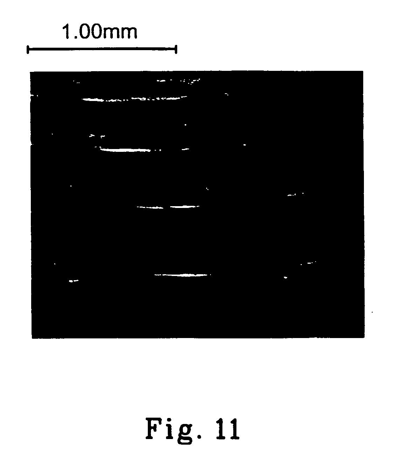

The photomicrographs of FIGS. 9-11 are believed to depict visually the mechanism described schematically in FIGs. 8A-8C. FIG. 9 is an optical photomicrograph showing the first surface and primary apertures of a web formed by the methods of the present invention. In an as-formed, unextended configuration the continuous first surface of the web embodiment shown in FIG. 9 generally forms a regular pattern of 1 mm square primary apertures spaced about 1 mm apart on all sides. FIGs. 10 and 11 are scanning electron microscope photomicrographs showing the discontinuous second surface of the web embodiment of FIG. 9, shown at a slightly different scale. FIG. 10 shows the second surface of an elastomeric web generally in a plane remote from the plane of the first surface in an unstretched state. FIG. 11 shows the second surface of a web in a state of approximately 100% elongation. As shown in FIG. 11, the edges of the secondary apertures remain remote from the plane of the first surface. Although some distortion of the secondary apertures takes place, the edges remain in a substantially unstressed condition. Again, it is this substantial decoupling of the strain-induced stress of the web from strain-induced stress at the secondary apertures that significantly increases web reliability.

The differential elastic behavior of planar multilayer films or fibers having a relatively less elastic skin layer stretched beyond its elastic limit is known in the art, as described in the aforementioned U.S. Patent to Krueger et al., as well as in U.S. Patent Nos. 5,376,430 to Swenson et al., issued Dec. 27, 1994 and 5,352,518 to Muramoto et al., issued Oct. 4, 1994. As shown in the art, upon recovery after extension beyond the elastic limits of the skin layer, the skin layer may form a microscopic microtexture of peak and valley irregularities, due to the resulting increased surface area of the skin layer relative to the elastomeric layer.

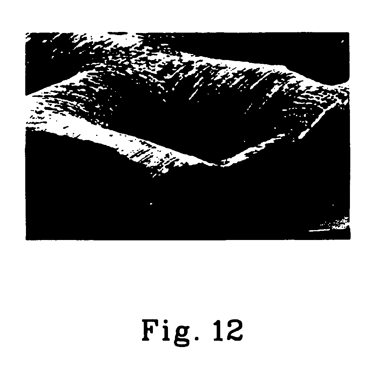

Likewise, when a web of the present invention is strained for the first time, the skin layer of the strained portion may be stressed beyond its elastic limit. The elastomeric layer allows the web to return substantially to its pre-stressed, macroscopic, three-dimensional configuration, but the portions of the skin layer that were stressed beyond their elastic limit may not return to a pre-stressed configuration due to the excess material created in the inelastic strain. Upon recovery after extension, the skin layer forms microscopic microtexture of peak and valley irregularities, more generally described as transversely-extending rugosities, as shown in the photomicrograph of FIG. 12. The rugosities form on the interconnecting members in substantially uniform patterns generally transverse to the direction of stretch, and generally radially disposed about the primary apertures. Depending on the degree of strain on the web, the rugosities may be limited to substantially the continuous first surface of the web, or more generally may extend over substantially the entire surface of the interconnecting members.

Without being bound by theory, it is believed that the transversely-extending rugosities are beneficial to the elastomeric web for at least two reasons. First, the rugosities impart a softer overall texture or feel to the elastomeric web. Second, the rugosities, being radially disposed to the primary apertures, and extending toward the secondary apertures, may facilitate better fluid handling characteristics when used as a body-contacting web of a disposable absorbent article.

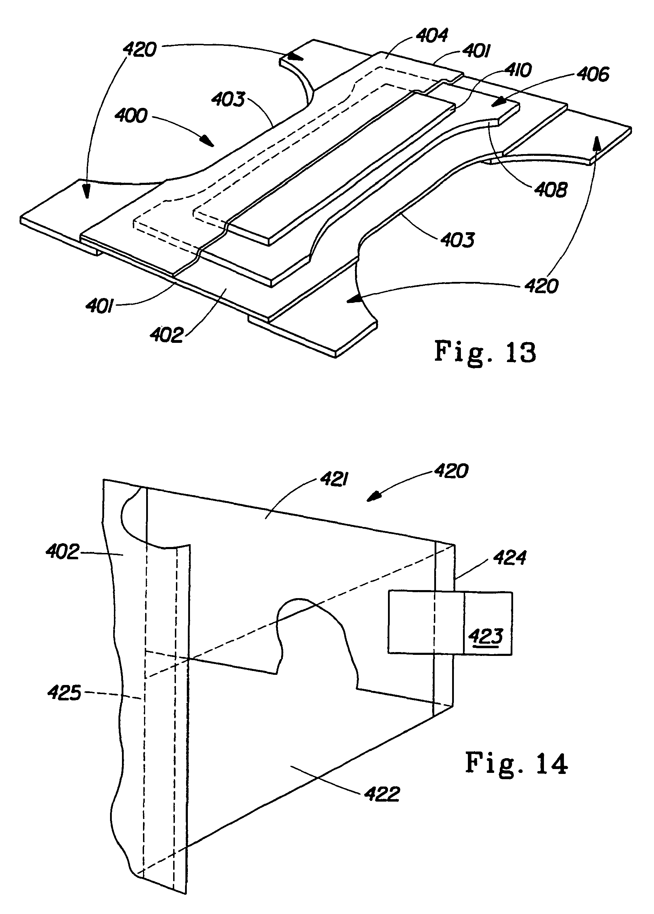

A representative embodiment of an elastomeric web of the present invention utilized in a disposable absorbent article in the form of a diaper **400,** is shown in FIG. 13. As used herein, the term "diaper" refers to a garment generally worn by infants and incontinent persons that is worn about the lower torso of the wearer. It should be understood, however, that the elastomeric web of the present invention is also applicable to other absorbent articles such as incontinent briefs, training pants, sanitary napkins, and the like. The diaper **400** depicted in FIG. 13 is a simplified absorbent article that could represent a diaper prior to its being placed on a wearer. It should be understood, however, that the present invention is not limited to the particular type or configuration of diaper shown in FIG. 13. A particularly preferred representative embodiment of a disposable absorbent article in the form of a diaper is taught in U.S. Pat. No. 5,151,092, to Buell et al., issued September 29, 1992.

FIG. 13 is a perspective view of the diaper **400** in its uncontracted state (i.e., with all the elastic induced contraction removed) with portions of the structure being cut-away to more clearly show the construction of the diaper **400.** The portion of the diaper **400** which contacts the wearer faces the viewer. The diaper **400** is shown in FIG. 13 to preferably comprise a liquid pervious topsheet **404;** a liquid impervious backsheet **402** joined with the topsheet **404;** and an absorbent core **406** positioned between the topsheet **404** and the backsheet **402.** Additional structural features such as elastic leg cuff members and fastening means for securing the diaper in place upon a wearer may also be included.

While the topsheet **404,** the backsheet **402,** and the absorbent core **406** can be assembled in a variety of well known configurations, a preferred diaper configuration is described generally in U.S. Patent 3,860,003 to Buell, issued January 14, 1975. Alternatively preferred configurations for disposable diapers herein are also disclosed in U.S. Patent 4,808,178 to Aziz et al., issued February 28, 1989; U.S. Patent 4,695,278 to Lawson, issued September 22, 1987; and U.S. Patent 4,816,025 to Foreman, issued March 28, 1989.

FIG. 13 shows a representative embodiment of the diaper **400** in which the topsheet **404** and the backsheet **402** are co-extensive and have length and width dimensions generally larger than those of the absorbent core **406.** The topsheet **404** is joined with and superimposed on the backsheet **402** thereby forming the periphery of the diaper **400.** The periphery defines the outer perimeter or the edges of the diaper **400.** The periphery comprises the end edges **401** and the longitudinal edges **403.**

The size of the backsheet **402** is dictated by the size of the absorbent core **406** and the exact diaper design selected. In a preferred embodiment, the backsheet **402** has a modified hourglass-shape extending beyond the absorbent core **406** a minimum distance of at least about 1.3 centimeters to about 2.5 centimeters (about 0.5 to about 1.0 inch) around the entire diaper periphery.

The topsheet **404** and the backsheet **402** are joined together in any suitable manner. As used herein, the term "joined" encompasses configurations whereby the topsheet **404** is directly joined to the backsheet **402** by affixing the topsheet **404** directly to the backsheet **402,** and configurations whereby the topsheet **404** is indirectly joined to the backsheet **402** by affixing the topsheet **404** to intermediate members which in turn are affixed to the backsheet **402.** In a preferred embodiment, the topsheet 404 and the backsheet **402** are affixed directly to each other in the diaper periphery by attachment means (not shown) such as an adhesive or any other attachment means as known in the art. For example, a uniform continuous layer of adhesive, a patterned layer of adhesive, or an array of separate lines or spots of adhesive can be used to affix the topsheet **404** to the backsheet **402.**

End edges **401** form a waist region, which in a preferred embodiment comprise a pair of elastomeric side panels **420,** which extend laterally from end edges **401** of diaper **400** in an extended configuration. In a preferred embodiment elastomeric side panels **420** comprise the elastomeric web of the present invention. In an especially preferred embodiment, when used as elastomeric side panels, the web of the present invention is further processed to form a composite laminate by bonding it on one, or preferably both sides thereof, with fibrous nonwoven materials to form a soft, compliant elasticized member, utilizing methods known in the art, such as adhesive bonding.

Fibrous nonwoven materials suitable for use in a composite laminate of the present invention include nonwoven webs formed of synthetic fibers (such as polypropylene, polyester, or polyethylene), natural fibers (such as wood, cotton, or rayon), or combinations of natural and synthetic fibers. Suitable nonwoven materials can be formed by various processes such as carding, spun-bonding, hydro-entangling, and other processes familiar to those knowledgeable in the art of nonwovens. A presently preferred fibrous nonwoven material is carded polypropylene, commercially available from Fiberweb of Simpsonville, S.C.

Fibrous nonwoven materials may be bonded to the elastomeric web by any one of various bonding methods known in the art. Suitable bonding methods include adhesive bonding such as by a uniform continuous layer of adhesive, a patterned layer of adhesive, or an array of separate lines, spirals, or spots of adhesive, or other methods such as heat bonds, pressure bonds, ultrasonic bonds, dynamic mechanical bonds, or any other suitable attachment means or combinations of these attachment means as are known in the art. Representative bonding methods are also described in PCT application WO 93/09741, entitled "Absorbent Article Having a Nonwoven and Apertured Film Coversheet", published May 27, 1993 naming Aziz et al. as inventors.

After bonding to a fibrous nonwoven material, the composite web may tend to be less elastomeric due to the relative inelasticity of the bonded nonwoven. To render the nonwoven more elastic, and to restore elasticity to the composite laminate, the composite web may be processed by methods and apparatus used for elasticizing "zero strain" laminates by incremental stretching, as disclosed in the aforementioned Buell et al. '092 patent, as well as the aforementioned Weber et al. '897, Buell et al. '793, and Weber et al. '679 patents. The resulting elasticized "zero-strain" composite web then has a soft, cloth-like feel for extended use and comfortable fit in an absorbent garment.

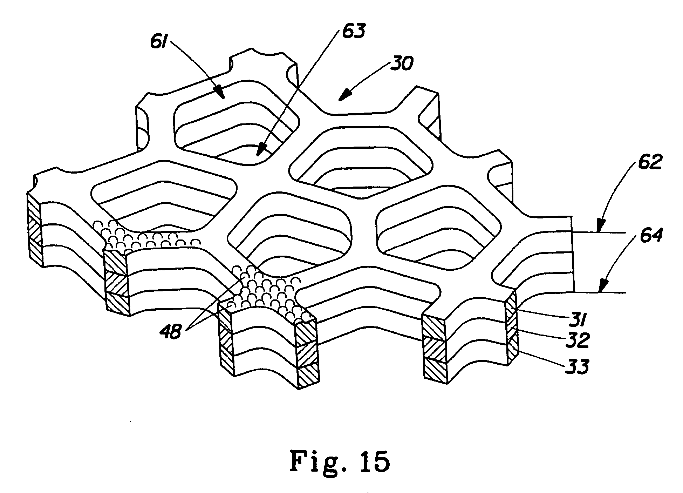

Side panels 420 may be joined to the diaper in any suitable manner known in the art. For example, as shown in FIG. 13, side panels 420 may be affixed directly to the backsheet 402 by attachment means (not shown) such as an adhesive or any other attachment means as known in the art. A particularly preferred configuration for side panels 420 is shown in FIG. 14, a configuration which is more fully disclosed in commonly assigned, co-pending U.S. Pat. Applications, S.N. 08/707,346, by LaVon et al., filed September 3, 1996, and S.N. 08/155,048, filed November, 19, 1993.

As shown in FIG. 14, side panel **420** is preferably comprised of two webs or strips, **421** and **422.** Strips **421** and **422** may be two discrete strips, or alternatively they may be formed by bending a single strip at leading edge **424,** and offsetting the two resulting strip lengths in a non-parallel manner. If two discrete strips are used, they may be bonded, as with suitable adhesive, to one another at leading edge **424,** and may simultaneously be bonded to tape tab **423.** Side panel **420** may be bonded to backsheet **402** at bond area **425** in any suitable manner, and particularly as disclosed in the aforementioned LaVon et al. '346 patent application. While it is not necessary that the pairs of side panels be identical, they are preferably mirror images one of the other.

Tape fasteners, e.g., tape tab **423,** are typically applied to at least one pair of elastomeric side panels **420** to provide a fastening means for holding the diaper on the wearer. The tape tab fasteners can be any of those well known in the art, such as the fastening tape disclosed in the aforementioned Buell '092 patent, and U.S. Patent 3,848,594 to Buell, issued November 19, 1974.

Other elastic members (not shown), of the present invention may be disposed adjacent the periphery of the diaper **400.** Elastic members are preferably along each longitudinal edge **403,** so that the elastic members tend to draw and hold the diaper **400** against the legs of the wearer. In addition, the elastic members can be disposed adjacent either or both of the end edges **401** of the diaper **400** to provide a waistband as well as or rather than leg cuffs. For example, a suitable waistband is disclosed in U.S. Patent 4,515,595 to Kievit et al., issued May 7, 1985. In addition, a method and apparatus suitable for manufacturing a disposable diaper having elastically contractible elastic members is described in U.S. Patent 4,081,301 to Buell, issued March 28, 1978.

The elastic members are secured to the diaper **400** in an elastically contractible condition so that in a normally unrestrained configuration, the elastic members effectively contract or gather the diaper **400.** The elastic members can be secured in an elastically contractible condition in at least two ways. For example, the elastic members can be stretched and secured while the diaper **400** is in an uncontracted condition. In addition, the diaper **400** can be contracted, for example, by pleating, and the elastic members secured and connected to the diaper **400** while the elastic members are in their relaxed or unstretched condition. The elastic members may extend along a portion of the length of the diaper **400.** Alternatively, the elastic members can extend the entire length of the diaper **400,** or any other length suitable to provide an elastically contractible line. The length of the elastic members is dictated by the diaper design.

The elastic members can be in a multitude of configurations. For example, the width of the elastic members can be varied from about 0.25 millimeters (0.01 inches) to about 25 millimeters (1.0 inch) or more; the elastic members can comprise a single strand of elastic material or can comprise several parallel or non-parallel strands of elastic material; or the elastic members can be rectangular or curvilinear. Still further, the elastic members can be affixed to the diaper in any of several ways which are known in the art. For example, the elastic members can be ultrasonically bonded, heat and pressure sealed into the diaper **400** using a variety of bonding patterns or the elastic members can simply be glued to the diaper **400.**

As shown in FIG. 13, the absorbent core **406** preferably includes a fluid distribution member **408.** In a preferred configuration such as depicted in FIG. 13, the absorbent core **406** preferably further includes an acquisition layer or member **410** in fluid communication with the fluid distribution member **408** and located between the fluid distribution member **408** and the topsheet **404.** The acquisition layer or member **410** may be comprised of several different materials including nonwoven or woven webs of synthetic fibers including polyester, polypropylene, or polyethylene, natural fibers including cotton or cellulose, blends of such fibers, or any equivalent materials or combinations of such materials.

In use, the diaper **400** is applied to a wearer by positioning the back waistband region under the wearer's back, and drawing the reminder of the diaper **400** between the wearer's legs so that the front waistband region is positioned across the front of the wearer. The elastomeric side panels are then extended as necessary for comfort and fit, and the tape-tab or other fasteners are then secured preferably to outwardly facing areas of the diaper **400.** By having side panels **420** comprising an elastomeric web of the present invention, the diaper may be adapted for differing sizes of children, for example, in a manner providing for close, comfortable fit with breathability.

While a disposable diaper is shown as a preferred embodiment of a garment comprising an elastomeric web of the present invention, this disclosure is not meant to be limiting to disposable diapers. Other disposable garments may also incorporate an elastomeric web of the invention in various parts to give added comfort, fit and breathability. As well, it is contemplated that even durable garments such as undergarments and swimwear may benefit from the durable porous, extensible characteristics of an elastomeric web of the present invention.

The multilayer film **120** of the present invention may be processed using conventional procedures for producing multilayer films on conventional coextruded film-making equipment. In general, polymers can be melt processed into films using either cast or blown film extrusion methods both of which are described in "Plastics Extrusion Technology" 2nd Ed., by Allan A, Griff (Van Nostrand Reinhold-1976). Cast film is extruded through a linear slot die. Generally, the flat web is cooled on a large moving polished metal roll. It quickly cools, and peels off the first roll, passes over one or more auxiliary rolls, then through a set of rubber-coated pull or "haul-off" rolls, and finally to a winder.

In blown film extrusion the melt is extruded upward through a thin annular die opening. This process is also referred to as tubular film extrusion. Air is introduced through the center of the die to inflate the tube and causes it to expand. A moving bubble is thus formed which is held at constant size by control of internal air pressure. The tube of film is cooled by air blown through one or more chill rings surrounding the tube. The tube is next collapsed by drawing it into a flattened frame through a pair of pull rolls and into a winder.

A coextrusion process requires more than one extruder and either a coextrusion feedblock or a multi-manifold die system or combination of the two to achieve the multilayer film structure. U.S. Pat. Nos. 4,152,387 and 4,197,069, issued May 1, 1979 and April 8, 1980, respectively, both to Cloeren, disclose the feedblock principle of coextrusion. Multiple extruders are connected to the feedblock which employs moveable flow dividers to proportionally change the geometry of each individual flow channel in direct relation to the volume of polymer passing through said flow channels. The flow channels are designed such that at their point of confluence, the materials flow together at the same flow rate and pressure eliminating interfacial stress and flow instabilities. Once the materials are joined in the feedblock, they flow into a single manifold die as a composite structure. It is important in such processes that the melt viscosities and melt temperatures of the material do not differ too greatly. Otherwise flow instabilities can result in the die leading to poor control of layer thickness distribution in the multilayer film.

An alternative to feedblock coextrusion is a multi-manifold or vane die as disclosed in aforementioned U.S. Pat. Nos. 4,152,387, 4,197,069, as well as U.S. No. 4,533,308, issued August 6, 1985 to Cloeren, Whereas in the feedblock system melt streams are brought together outside and prior to entering the die body, in a multi-manifold or vane die each melt stream has its own manifold in the die where the polymers spread independently in their respective manifolds. The melt streams are married near the die exit with each melt stream at full die width. Moveable vanes provide adjustability of the exit of each flow channel in direct proportion to the volume of material flowing through it, allowing the melts to flow together at the same linear flow rate, pressure, and desired width.

Since the melt flow properties and melt temperatures of polymers vary widely, use of a vane die has several advantages. The die lends itself toward thermal isolation characteristics wherein polymers of greatly differing melt temperatures, for example up to 175° F. (80° C.), can be processed together.

Each manifold in a vane die can be designed and tailored to a specific polymer. Thus the flow of each polymer is influenced only by the design of its manifold, and not forces imposed by other polymers. This allows materials with greatly differing melt viscosities to be coextruded into multilayer films. In addition, the vane die also provides the ability to tailor the width of individual manifolds, such that an internal layer can be completely surrounded by the outer layer leaving no exposed edges. The aforementioned patents also disclose the combined use of feedblock systems and vane dies to achieve more complex multilayer structures.

The multilayer films of the present invention may comprise two or more layers, at least one of the layers being elastomeric. It is also contemplated that multiple elastomeric layers may be utilized, each elastomeric layer being joined to one or two skin layers. In a three-layer film, core layer **101** has opposed first and second sides, one side being substantially continuously joined to one side of each outer skin layer **103** prior to the application of applied stress to the web. Three-layer films, like multilayer film **120** shown in FIG. 4, preferably comprise a central elastomeric core **101** that may comprise from about 10 to 90 percent of the total thickness of the film. Outer skin layers **103** are generally, but not necessarily, identical and may comprise from about 5 to 45 percent of the total thickness of the film. Although an elastomeric layer is generally substantially joined to one or two skin layers without the use of adhesives, adhesives or tie layers may be used to promote adherence between the layers. Tie layers, when employed, may each comprise from bout 5 to 10 percent of the total film thickness.

After the multilayer elastomeric film has been coextruded it is preferably fed to a forming structure for aperturing and cooling, thereby producing a macroscopically-expanded, three-dimensional, apertured elastomeric web of the present invention. In general the film may be formed by drawing such film against a forming screen or other forming structure by means of a vacuum and passing an air or water stream over the outwardly posited surface of the film. Such processes are described in the aforementioned Radel et al. patent as well as in U.S. Pat. No. 4,154,240, issued to Lucas et al., both hereby incorporated herein by reference. Forming a three-dimensional elastomeric web may alternatively be accomplished by applying a liquid stream with sufficient force and mass flux to cause the web formation as disclosed in commonly assigned U.S. Pat. No. 4,695,422, issued to Curro et al. Alternatively, the film can be formed as described in commonly assigned U.S. Pat. No. 4,552,709 to Koger et al.. Preferably the elastomeric web is uniformly macroscopically expanded and apertured by the method of supporting the forming structure in a fluid pressure differential zone by a stationary support member as taught by commonly assigned U.S. Pat. Nos. 4,878,825 and 4,741,877, both to Mullane, Jr.

Although not shown, the process of the present invention, using a conventional forming screen having a woven wire support structure, would also form a web within the scope of the present invention. The knuckles of a woven wire forming screen would produce a macroscopically-expanded, three-dimensional web having a pattern of undulations in the first surface, the undulations corresponding to the knuckles of the screen. However, the undulations would remain generally in the plane of the first surface, remote from the plane of the second surface. The cross-section of the interconnecting members would remain generally upwardly concave-shaped with the interconnecting sidewalls of the interconnecting members terminating to form secondary apertures substantially in the plane of the second surface.

A particularly preferred forming structure comprises a photoetched laminate structure as shown in FIG. 15, showing an enlarged, partially segmented, perspective illustration of a photoetched laminate structure of the type used to form plastic webs of the type generally illustrated in FIG. 2. The laminate structure **30** is preferably constructed generally in accordance with the teachings of the aforementioned Radel et al. patent, and is comprised of individual lamina **31, 32,** and **33.** A comparison of FIG. 3 with the elastomeric web **80** shown in FIG. 2 reveals the correspondence of primary aperture **71** in plane **102** of the elastomeric web **80** to opening **61** in the uppermost plane **62** of the photoetched laminate structure **30.** Likewise, aperture opening **72** in plane **106** of elastomeric web **80** corresponds to opening **63** in lowermost plane **64** of photoetched laminate structure **30.**

The uppermost surface of photoetched laminate structure **30** located in uppermost plane **62** may be provided with a microscopic pattern of protuberances **48** without departing from the scope of the present invention. This is preferably accomplished by applying a resist coating which corresponds to the desired microscopic pattern of surface aberrations to the top side of a planar photoetched lamina **31,** and thereafter initiating a second photoetching process. The second photoetching process produces a lamina **31** having a microscopic pattern of protuberances **48** on the uppermost surface of the interconnected elements defining the pentagonally shaped apertures, e.g., aperture **41.** The microscopic pattern of protuberances does not substantially remove the first surface from the plane of the first surface. The first surface is perceived on a macroscopic scale, while the protuberances are perceived on a microscopic scale. Construction of a laminate structure employing such a pattern of protuberance **48** on its uppermost layer is generally disclosed in the aforementioned Ahr et al. patent.

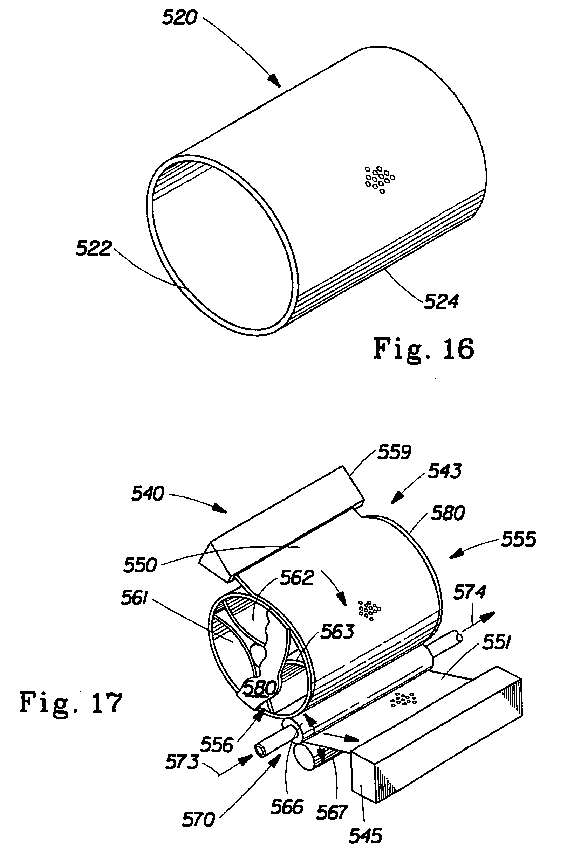

Processes for constructing laminate structures of the type generally disclosed in FIG. 2 are disclosed in the aforementioned Radel et al. patent. The photoetched laminate structures are preferably rolled by conventional techniques into a tubular forming member **520,** as illustrated generally in FIG. 16 and their opposing ends joined generally in accordance with the teachings of Radel et al. to produce a seamless tubular forming member **520.**

The outermost surface **524** of the tubular forming member **520** is utilized to form the multilayer elastomeric web brought in contact therewith while the innermost surface **522** of the tubular member generally does not contact the plastic web during the forming operation. The tubular member may, in a preferred embodiment of the present invention, be employed as the forming surface on debossing/perforating cylinder **555** in a process of the type described in detail in the aforementioned Lucas et al. patent. A particularly preferred apparatus **540** of the type disclosed in said patent is schematically shown in FIG. 17. It includes debossing and perforating means **543,** and constant tension film forwarding and winding means **545** which may, if desired, be substantially identical to and function substantially identically to the corresponding portions of the apparatus shown and described in U.S. Pat. No. 3,674,221 issued to Riemersma on July 4, 1972. The frame, bearing, supports and the like which must necessarily be provided with respect to the functional members of apparatus **540** are not shown or described in detail in order to simplify and more clearly depict and disclose the present invention, it being understood that such details would be obvious to persons of ordinary skill in the art of designing plastic film converting machinery.

Briefly, apparatus **540,** schematically shown in FIG. 17, comprises means for continuously receiving a ribbon of thermoplastic film **550** from coextruder **559,** for example, and converting it into a debossed and perforated film **551.** Film **550** is preferably supplied directly from the coextrusion process while still above its thermoplastic temperature so as to be vacuumed formed prior to cooling. Alternatively, film **550** may be heated by directing hot air jets against one surface of the film while applying vacuum adjacent the opposite surface of the film. To maintain sufficient control of film **550** to substantially obviate wrinkling and/or macroscopically distending the film, apparatus **540** comprises means for maintaining constant machine direction tension in the film both upstream and downstream of a zone where the temperature is greater than the thermoplastic temperature of the film, but in which zone there is substantially zero machine direction and cross-machine direction tension tending to macroscopically distend the film. The tension is required to control and smooth a running ribbon of thermoplastic film; the zero tension zone results from the film in the zone being at a sufficiently high temperature to enable debossing and perforating the film.

As can be seen in FIG. 17, the debossing and perforating means **543** includes a rotatably mounted debossing perforating cylinder **555** having closed ends **580,** a nonrotating triplex vacuum manifold assembly **556** and optional hot air jet means (not shown). The triplex vacuum manifold assembly **556** comprises three manifolds designated **561, 562,** and **563.** Also shown in FIG. 17 is a power rotated lead-off/chill roll **566** and a soft-face (e.g., low density neoprene) roll **567** which is driven with the chill roll. Briefly, by providing means (not shown) for independently controlling the degree of vacuum in the three vacuum manifolds, a thermoplastic ribbon of film running circumferentially about a portion of the debossing-perforating cylinder 555 is sequentially subjected to a first level of vacuum by manifold **561,** a second level of vacuum by manifold 562, and a third level of vacuum by manifold **563.** As will be described more fully hereinafter, the vacuum applied to the film by manifold **561** enables maintaining upstream tension in the film, vacuum applied by manifold **562** enables perforating the film, and vacuum applied by manifold **563** enables cooling the film to below its thermoplastic temperature and enables establishing downstream tension therein. If desired, the film contacting surface of the debossing-perforating cylinder **555** may be preheated prior to reaching vacuum manifold **562** by means well known in the art (and therefore not shown) to facilitate better conformance of plastic films comprised of flow-resistant polymers during the debossing operation. The nip **570** intermediate chill roll **566** and the soft-face roll **567** is only nominally loaded because high pressure would iron-out the three-dimensional debossments which are formed in the film in the aforementioned manner. However, even nominal pressure in nip **570** helps the vacuum applied by manifold **563** to isolate downstream tension (i.e., roll winding tension) from the debossing-perforating portion of the debossing-perforating cylinder **555,** and enables the nip **570** to peel the debossed and perforated film from the debossing-perforating cylinder **555.** Moreover, while vacuum drawn ambient air passing through the film into manifold **563** will normally cool the film to below its thermoplastic temperature, the passage of coolant through the chill roll as indicated by arrows **573, 574** in FIG. 17 will enable the apparatus to handle thicker films or be operated at higher speeds.

The debossing and perforating means **543** comprises the rotatably mounted debossing-perforating cylinder **555,** means (not shown) for rotating the cylinder **555** at a controlled peripheral velocity, the non-rotating triplex vacuum manifold assembly **556** inside the debossing-perforating cylinder **555,** means (not shown) for applying controlled levels of vacuum inside the three vacuum manifolds **561, 562** and **563** comprising the triplex manifold assembly **556,** and optional hot air jet means (not shown). The debossing-perforating cylinder **555** may be constructed by generally following the teachings of the aforementioned Lucas et al. patent, but substituting a tubular laminate forming surface of the present invention for the perforated tubular forming surface disclosed therein.

To summarize, the first vacuum manifold **561,** and the third vacuum manifold **563** located within the debossing-perforating cylinder **555** enable maintaining substantially constant upstream and downstream tension, respectively, in a running ribbon of film while the intermediate portion of the film adjacent the second vacuum manifold **562** within the debossing-perforating cylinder **555** is subjected to tension vitiating heat and vacuum to effect debossing and perforating of the film.

While a preferred application of the disclosed photoetched laminate structure is in a vacuum film forming operation as generally outlined in the aforementioned commonly assigned patent issued to Lucas et al., it is anticipated that photoetched laminate forming structures of the present invention could be employed with equal facility to directly form a three-dimensional plastic structure of the present invention. Such a procedure would involve applying a heated fluid plastic material, typically a thermoplastic resin, directly to the forming surface applying a sufficiently great pneumatic differential pressure to the heated fluid plastic material to cause said material to conform to the image of the perforate laminate forming surface, allowing the fluid material to solidify, and thereafter removing the three-dimensional plastic structure from the forming surface.

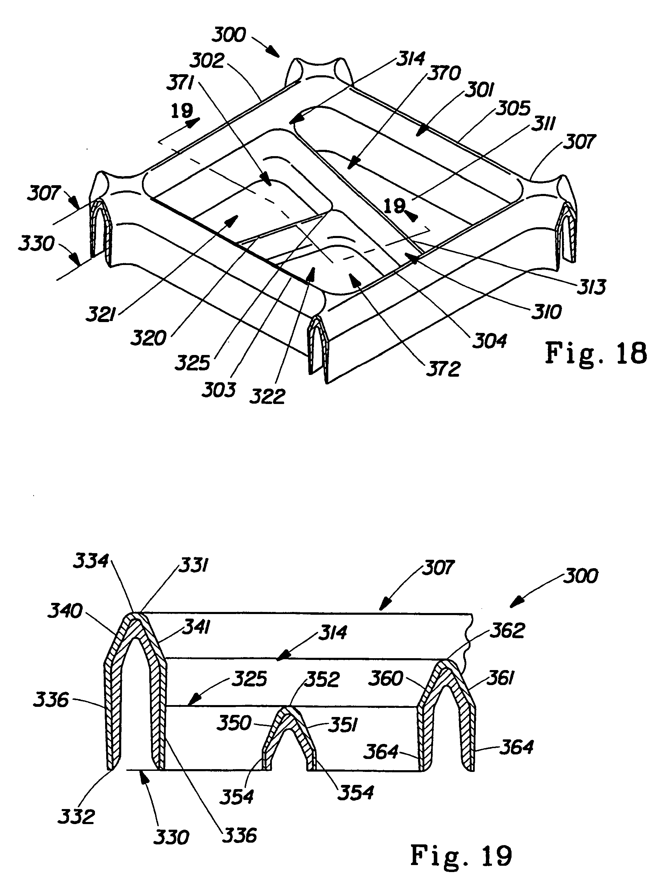

While the web embodiment generally disclosed in FIG. 2 represents a particularly preferred embodiment of the present invention, any number of interconnecting members may be employed within web structures of the present invention, e.g., secondary, tertiary, etc. An example of such a structure is shown in FIG. 18 which also shows a variant of upwardly concave-shaped cross-sections of interconnecting members. The aperture network shown in FIG. 18 comprises a primary aperture **301** formed by a multiplicity of primary interconnecting elements, e.g., elements **302, 303, 304** and **305** interconnected to one another in uppermost plane **307** of the web **300,** said opening being further subdivided into smaller secondary apertures **310** and **311** by secondary interconnecting member **313** at an intermediate plane **314.** Primary aperture **310** is further subdivided by tertiary interconnecting member **320** into even smaller secondary apertures **321** and **322,** respectively, at a still lower plane **325** within web **300.** As can be seen from FIG. 19, which is taken along section line 19-19 of FIG. 18, planes **314** and **325** are generally parallel to and located intermediate uppermost plane **307** and lowermost plane **330.**

In the web embodiment illustrated in FIG 17 and 18, the primary and secondary interconnecting members are further connected to intersecting tertiary interconnecting members, e.g., tertiary interconnecting members **320,** which also exhibit a generally upwardly concave-shaped cross-section along their length. The intersecting primary, secondary and tertiary interconnecting members terminate substantially concurrently with one another in the plane **330** of the second surface **332** to form a multiplicity of openings or apertures in the web's second surface, e.g., apertures **370, 371** and **372.** It is clear that the interconnected primary, secondary and tertiary interconnecting members located between the first and second surfaces of the web **300** form a closed network connecting each of the primary apertures, e.g., aperture **301** in the first surface **331** of the web, with a multiplicity of secondary apertures, e.g., apertures **370, 371** and **372,** in the second surface **332** of the web.

As will be appreciated, the generally upwardly concave-shaped interconnecting members utilized in webs of the present invention may be substantially straight along their entire length. Alternatively, they may be curvilinear, they may comprise two or more substantially straight segments or they may be otherwise oriented in any desired direction along any portion of their length. There is no requirement that the interconnecting members be identical to one another. Furthermore, the aforementioned shapes may be combined in any desired fashion to produce whatever pattern is desired. Regardless of the shape ultimately selected, the upwardly concave-shaped cross-section which exists along the respective lengths of the interconnected interconnecting members helps impart resilience to elastomeric webs of the present invention, as well as three-dimensional standoff.

It will be obvious to those skilled in the art that various changes and modifications can be made without departing from the spirit and scope of the present invention. For example, in the event it is desired to produce webs of the present invention wherein a predetermined portion of the web is capable of preventing fluid transmission, it is feasible to perform the debossing operation without causing rupture of the web in its second surface. Commonly assigned U.S. Pat. No. 4,395,215 issued to Bishop on July 26, 1983 and commonly assigned U.S. Pat No. 4,747,991 issued to Bishop on May 31, 1988, fully disclose how to construct tubular forming structures which are capable of producing three-dimensionally expanded films which are uniformly debossed, but apertured only in predetermined areas.

It is believed that the description contained herein will enable one skilled in the art to practice the present invention in many and varied forms. Nonetheless, the following exemplary embodiments and analytical methods are set forth for the purpose of illustrating the beneficial elastic reliability at body temperature, and the lotion resistance of particularly preferred elastomeric materials of the present invention.

## TEST METHODS

### A. TENSILE STRENGTH AND ELONGATION AT FAILURE

The properties determined by this method may correlate with the stretchability of the elastomeric film. These properties are relevant to the choice of material suitable for use as the elastic component of an absorbent article, particularly pull-on diapers, training pants, diapers with fasteners, or other absorbent garment for adult use, that is substantially stretched when being put on.

A commercial tensile tester from Instron Engineering Corp., Canton, MA or SINTECH-MTS Systems Corporation, Eden Prairie, MN is used for this test. The films are cut into 1" wide in MD (the Machine Direction of the film) by 4" long in CD (the Cross Direction is at a 90° angle from MD) specimens. The instrument is interfaced with a computer for controlling the test speed and other test parameters, and for collecting, calculating and reporting the data. The tensile stress-strain properties of the film are determined according to ASTM Method D882-83. These tensile properties are measured at room temperature (about 20°C). The procedure is as follows:

   (1) choose appropriate jaws and load cell for the test; the jaws should be wide enough to fit the sample, typically 1 "wide jaws are used; the load cells is chosen so that the tensile response from the sample tested will be between 25% and 75% of the capacity of the load cells or the load range used, typically a 22.7 Kg (50 lb) load cell is used;
   (2) calibrate the instrument according to the manufacture's instructions;
   (3) set the gauge length at 2";
   (4) place the sample in the flat surface of the jaws according to the .manufacture's instructions;
   (5) set the cross head speed at a constant speed of 508 mm/min (20"/min) and collect data simultaneously; and
   (6) calculate and report tensile properties including elongation at break, and load at 100% and 200% elongation.

### B. Two Cycle Hysteresis Test

The properties determined by this method may correlate with what forces the consumer feels from the side panel, waist band, or other elastic components when initially applying the product and how the product fits after it has been put on.

A commercial tensile tester from Instron Engineering Corp., Canton, MA or SINTECH-MTS Systems Corporation, Eden Prairie, MN is used for this test. The films are cut into specimens 1" wide in MD by 4" long in CD. The instrument is interfaced with a computer for controlling the test speed and other test parameters, and for collecting, calculating and reporting the data. The two cycle hysteresis is measured at room temperature. The procedure is as follows:

(1) choose appropriate jaws and load cell for the test; the jaws should be wide enough to fit the sample, typically 1 "wide jaws are used; the load cells is chosen so that the response from the sample tested will be between 25% and 75% of the capacity of the load cells or the load range used, typically a 22.7 kg (50 lb) load cell is used;
(2) calibrate the instrument according to the manufacture's instructions;
(3) set the gauge length at 2";
(4) place the sample in the flat surface of the jaws according to the manufacture's instructions;
(5) set the cross head speed at a constant speed of 508 mm/min (20"/min);
(6) start the two cycle hysteresis test and collect data simultaneously, the two cycle hysteresis test has the following steps:

a) go to 200% elongation at the constant rate of 508 mm/min (20"/min);
b) hold position for 30 seconds;
c) go to 0% strain at the constant speed of 508 mm/min (20"/min);
d) hold position for 60 seconds;
e) go to 50% elongation at the constant speed 508 mm/min (of 20"/min);
f) hold position for 30 seconds; and
g) go to 0% strain; and

(9) calculate and report properties including stress relaxation at 200% elongation, and percent set.

C. Sustained Load Stress Relaxation Test

This method determines the ability of the material to resist forced relaxation, hence providing sustained fit over the maximum wear time of an absorbent article at 100°F (approximately body temperature). The properties determined by this method may correlate with the forces the consumer feels from the side panel, waist band, or other elastic components of the product and how the product fits at body temperature after it has been worn for a specified period of time.

A commercial tensile tester from Instron Engineering Corp., Canton, MA or SINTECH-MTS Systems Corporation, Eden Prairie, MN is used for this test. The films are cut into specimens 1" wide in MD by 2" long in CD. Mark 1" gauge length on the sample and wrap tapes around the sample outside the gauge length marks to provide better surface for gripping by the jaws. The instrument is interfaced with a computer for controlling the test speed and other test parameters, and for collecting, calculating and reporting the data. The sustained load stress relaxation is measured at 37.8°C (100°F, about human body temperature). The procedure is as follows:

(1) choose appropriate jaws and load cell for the test; the jaws should be wide enough to fit the sample, typically I "wide jaws are used; the load cells is chosen so that the response from the sample tested will be between 25% and 75% of the capacity of the load cells or the load range used, typically a 22.7 kg (50 lb) load cell is used;
(2) calibrate the instrument according to the manufacture's instructions;
(3) set the gauge length at 2.54 cm (1");
(4) place the sample in the flat surface of the jaws according to the manufacture's instructions;
(5) set the cross head speed at a constant speed of 25.4 mm/sec (10"/min);
(6) start the sustained load stress relaxation test and collect data simultaneously, the sustained load stress relaxation test has the following steps:

a) go to 200% elongation at the constant rate of 25.4 mm/min. (10"/min);
b) hold position for 30 seconds;
c) go to 0% strain at the constant speed of 25.4 mm/min. (10"/min);
d) hold position for 60 seconds;
e) go to 50% elongation at the constant speed of 25.4 mm/min (10"/min);
f) hold position for 10 hours; and
g) go to 0% strain; and

(7) calculate and report properties including initial and final load (i.e., the Final Sustained Load), and % loss.

The % loss is the stress relaxation at sustained load at 10 hours and is expressed as [(initial load at 50% elongation of cycle 2 - final load at 50% elongation of cycle 2 after 10 hours) / initial load at 50% elongation of cycle 2] x 100.

D. Lotion Resistance (Delay of Degradation)

This test measures the time delay to catastrophic failure of a web of the present invention due to degradation of the material by the lotion applied. The longer the time to failure, the more lotion resistant the material.

The test is conducted a room temperature and relative humidity of about 50%. The film material to be tested is cut into 76.2 mm (3") wide in MD (the Machine Direction of the film) by 76.2 mm (3") long in CD (the Cross Direction is at a 90° angle from MD) specimens. Each specimen is stretched in the CD to approximately 100% strain and secured to a flat surface such as a stiff cardboard. The specimen may be secured by stapling, for example.

The lotion is made by mixing the following melted (i.e., liquid) components together: Petrolatum (available from Witco Corp., Greenwich, CT as Perfecta®) Stearyl Alcohol (available from The Procter & Gamble Company, Cincinnati, OH as CO1897) and aloe extract (available from Madis Botanicals, Inc., South Hackensack, NJ as Veragel Lipoid in Kaydol). The weight percentages of these components are shown in Table I below:

Table I

| Component | Weight % |
| --- | --- |
| Petrolatum | 58 |
| Stearyl Alcohol | 41 |
| Aloe | 1 |

The lotion is heated up to a temperature 63 and 74°C (145 and 165 degrees F), so as to soften it for application to the stretched specimens. Using a cotton swab (e.g., a Q-TIP®), apply a band of lotion that extends the entire 76,2 mm (3") width of the specimen, near the middle of the specimen. The lotion should be applied by smearing the lotion in one direction, and then doubling back over the same area to ensure sufficient lotion coverage. If the amount of lotion is not sufficient to cover the entire specimen with a band of lotion, the application should be repeated with more lotion being carried by the cotton swab. The cotton swab should not be pressed hard on the specimen, just enough to smear the lotion.

The stretched and lotioned specimens are placed in an oven set at a temperature of 38°C (100 degrees F). The time to failure of the specimen is measured and recorded. Failure is complete failure of the web material, such that each original specimen results in at least two portions of the original web.

**EXAMPLES**

Extrudable and formable elastomeric compositions are prepared by blending varying amounts of a styrenic elastomeric copolymer such as KRATON® D series, such as D101, from Shell Chemical Company, Houston, TX, or VECTOR® series, such as VECTOR 6400 from Dexco Polymers, Houston, TX, a vinylarene resin such as polystyrene PS210 from Nova Chemical, Inc. Monaca, PA, and mineral oil such as BRITOL® available from Witco., Greenwich, CT, and DRAKEOL® available from Penrenco Company, Karns City, PA, to form an elastomeric mixture. A planar coextruded multilayer film is produced and then formed by methods disclosed above into an elastomeric web, generally in the configuration as shown in the photomicrographs of FIGs. 9-11.

The coextruded film comprises three layers as depicted in FIG. 4. The center elastomeric layer comprises styrenic triblock copolymer blended with polystyrene and mineral oil. The skin layers comprise polyolefinic material and each is typically about 0.0038 mm (0.15 mil) thick. The total gauge of the film is approximately 0.09 mm (3.5 mils) with the elastomeric layer being approximately 75-90% of the thickness. A monolayer elastomeric film is also produced by methods generally known in the art to form a film of about 0.072mm (2.8 mils) thick. The films are cut to into proper sample size according to the test methods described hereinabove.

Examples of the elastomeric composition suitable for use herein are shown in Table 1. The amount of each component is expressed in weight percent of the elastomeric composition.

TABLE 1: Elastomeric Compositions (Weight Percent)

| Sample | 1 | 2 | 3 |
|---|---|---|---|
|  | % | % | % |
| KRATON D 1101 S-B-S Block Copolymer | 50 | 49.80 | 54.80 |
| Polystyrene PS210 | 20 | 20 | 15 |
| Mineral Oil (Britol 50T) | 30 | 30 | 30 |
| Antioxidants Irganox 1010 and Irgafos 168 | 0 | 0.20 | 0.20 |

wherein KRATON® is available from Shell Chemical Co., Houston, TX; polystyrene PS 210 is available from Nova Chemicals, Inc., Monaca, PA; Mineral Oil is available from Witco., Greenwich, CT.

The physical properties of extruded monolayer films of the elastomeric compositions of Table I are shown in Tables 2, 3 and 4. By monolayer films is meant that the films planar, i.e., are not coextruded with skin layer, and are not post treated to form three-dimensional formed films as described hereinabove. The physical properties are determined by the TEST METHODS described hereinabove. All physical properties in Tables 2, 3, and 4 are expressed on an equal basis weight of the film samples, i.e., they are normalized based on basis weight. Tables 2, 3 and 4 show mechanical properties of films of the elastomeric material compositions of Table 1, with different levels of electron beam (e-beam) radiation treatment. As shown, by e-beam treating the elastomeric material of the present invention the stress relaxation at sustained load at elevated temperature for 10 hours is surprisingly reduced.

TABLE 2: Properties of Composition 1 (monolayer film) of Table 1

| E-Beam Level (Mrad) | 0 | 3 | 6 | 9 | 15 |
|---|---|---|---|---|---|
|  |  |  |  |  |  |
| Basis Weight (g/m2) | 70 | 70 | 70 | 70 | 70 |
| Stress at 100% Elongation (g/2.54 cm) (g/in) | 140 | 169 | 182 | 192 | 322 |
| Stress at 200% Elongation (g/2.54 cm) (g/in) | 179 | 242 | 252 | 332 | 579 |
| Stress Relaxation at 200% Elongation (%) | 16 | 14 | 16 | 15 | 21 |
| Set After A First Cycle to 200% Elongation (%) | 5 | 6 | 2 | 6 | 3 |
| Final Sustained Load at 50% Elongation (g/2.54 cm) (g/in) | 53 | 74 | 80 | 95 | 83 |
| Stress Relaxation at Sustained Load at 10 hours (%) | 31 | 24 | 25 | 32 | 20 |
| % Elongation at Break | 1050 | 938 | 841 | 660 | 577 |

TABLE 3 Properties of Composition 2 (monolayer film) of Table 1

| E-Beam Level (Mrad) | 0 | 3 | 6 | 9 | 15 |
|---|---|---|---|---|---|
|  |  |  |  |  |  |
| Basis Weight (g/m2) | 70 | 70 | 70 | 70 | 70 |
| Stress at 100% Elongation (g/2.54 cm) (g/in) | 132 | 173 | 194 | 224 | 232 |
| Stress at 200% Elongation (g/2.54 cm) (g/in) | 173 | 245 | 289 | 378 | 374 |
| Stress Relaxation at 200% Elongation (%) | 11 | 12 | 14 | 15 | 14 |
| Set After A First Cycle to 200% Elongation (%) | 5 | 4 | 3 | 5 | 2 |
| Final Sustained Load at 50% Elongation (g/2.54 cm) (g/in) | 53 | 63 | 76 | 89 | 89 |
| Stress Relaxation at Sustained Load at 10 hours (%) | 34 | 32 | 22 | 21 | 20 |
| % Elongation at Break | 1158 | 904 | 894 | 880 | 598 |

TABLE 4 Properties of Composition 3 (monolayer film) of Table 1

| E-Beam Level (Mrad) | 0 | 3 | 6 | 9 | 15 |
|---|---|---|---|---|---|
| | | | | | |
| Basis Weight (g/m2). | 70 | 70 | 70 | 70 | 70 |
| Stress at 100% Elongation (g/2.54 cm) (g/in) | 120 | 152 | 166 | 186 | 229 |
| Stress at 200% Elongation (g/2.54 cm) (g/in) | 150 | 217 | 267 | 292 | 433 |
| Stress Relaxation at 200% Elongation (%) | 8 | 9 | 8 | 12 | 11 |
| Set After A First Cycle to 200% Elongation (%) | 5 | 4 | 2 | 5 | 3 |
| Final Sustained Load at 50% Elongation (g/2.54 cm) (g/in) | 52 | 68 | 72 | 92 | 104 |
| Stress Relaxation at Sustained Load at 10 hours (%) | 28 | 27 | 27 | 19 | 20 |
| % Elongation at Break | 1170 | 1094 | 1037 | 890 | 620 |

As shown in Tables 2, 3, and 4, with higher levels of e-beam radiation treatment, each of the monolayer films of the present invention exhibit increased modulus as indicated by the stresses at 100% and 200% elongation. Sustained load is also increased with increased modulus as shown by the final sustained load at 50%. Surprisingly, the stress relaxation at sustained load for ten hours at elevated temperature is significantly reduced. This reduction has great benefit for use as stretch materials in disposable absorbent articles. The reduced stress relaxation at sustained load property of the present invention permits a diaper, for example, to fit better for longer periods of time at body temperatures. Therefore, sagging, drooping, and other fit problems are reduced.

A commercial grade of formulated S-B-S based block copolymer composition KRATON® D2104 was extruded into two materials of the present invention: 1) a monolayer film and 2) a coextruded three-dimensional, apertured film produced by the methods described herein. Table 5 below shows the mechanical properties of the monolayer film, and Table 6 below shows the mechanical properties of the coextruded, apertured film.

TABLE 5 Properties of Monolayer Film of KRATON® D2104

| E-Beam Level (Mrad) | 0 | 3 | 6 | 9 | 15 |
|---|---|---|---|---|---|
| | | | | | |
| Basis Weight (g/m2) | 70 | 70 | 70 | 70 | 70 |
| Stress at 100% Elongation (g/2.54 cm) (g/in) | 86 | 101 | 120 | 129 | 146 |
| Stress at 200% Elongation (g/2.54 cm) (g/in) | 109 | 140 | 174 | 186 | 225 |
| Stress Relaxation at 200% Elongation (%) | 5 | 5 | 5 | 4 | 5 |
| Set After A First Cycle to 200% Elongation (%) | 6 | 4 | 5 | 5 | 3 |
| Final Sustained Load at 50% Elongation (g/2.54 cm) (g/in) | 38 | 45 | 49 | 67 | 70 |
| Stress Relaxation at Sustained Load at 10 hours (%) | 34 | 29 | 24 | 13 | 18 |
| % Elongation at Break | 1103 | 1016 | 997 | 566 | 410 |

TABLE 6: Properties of Three-Dimensional Coextruded Apertured Film

| E-Beam Level (Mrad) | 0 | 3 | 6 | 9 | 15 |
|---|---|---|---|---|---|
| | | | | | |
| Basis Weight (g/m2) | 90 | 90 | 90 | 90 | 90 |
| Stress at 100% Elongation (g/2.54 cm) (g/in) | 127 | 137 | 155 | 154 | 175 |
| Stress at 200% Elongation (g/2.54 cm) (g/in) | 151 | 170 | 198 | 203 | 237 |
| Stress Relaxation at 200% Elongation (%) | 13 | 12 | 11 | 10 | 12 |

(continued)

| E-Beam Level (Mrad) | 0 | 3 | 6 | 9 | 15 |
|---|---|---|---|---|---|
| Set After A First Cycle to 200% Elongation (%) | 10 | 11 | 10 | 9 | 9 |
| Final Sustained Load at 50% Elongation (g/2.54 cm) (g/in) | 35 | 41 | 52 | 57 | 58 |
| Stress Relaxation at Sustained Load at 10 hours (%) | 31 | 25 | 24 | 21 | 22 |
| % Elongation at Break | 1169 | 1061 | 693 | 619 | 327 |

The three-dimensional coextruded apertured elastomeric web of the present invention (the web of Table 6) can exhibit reliable elastic performance by repeated and sustained web strains of up to 100%, 200%, 300% or 400% or more without significant affect on web elasticity or porosity. In general, the web exhibits a higher modulus in the first extension as the skin layers experience inelastic strain. Thereafter it is believed that microscopic rugosities formed on the interconnecting members in the regions of inelastic skin layer strain, which resulted in a lower and generally constant web modulus.

While being difficult to measure accurately, the gauge of the three-dimensional coextruded apertured elastomeric web from the first surface to the second surface can be on the order of I mm, for a draw ratio of approximately 10:1. In an as-formed, unextended configuration the continuous first surface can form a regular pattern of 1 mm square fluid-permeable apertures spaced about 1 mm apart on all sides. The secondary apertures were slightly smaller than the primary apertures giving the elastomeric web an open apertured area of approximately 12-16%.

As shown in Tables 5 and 6, with higher levels of e-beam radiation treatment, each of the films of the present invention exhibit increased modulus as indicated by the stresses at 100% and 200% elongation. Sustained load is also increased with increased modulus as shown by the final sustained load at 50%. Surprisingly, the stress relaxation at sustained load for ten hours at elevated temperature is significantly reduced. This reduction, as discussed above, has great benefit for materials used as stretch materials in disposable absorbent articles. The reduced stress relaxation at sustained load property of the present invention permits a diaper, for example, to fit better for longer periods of time at body temperatures. Therefore, sagging, drooping, and other fit problems are reduced.

A commercial grade of formulated S-B-S based block copolymer composition KRATON® D2104 was extruded into two materials of the present invention: 1) a monolayer film and 2) a coextruded three-dimensional, apertured film produced by the methods described herein (i.e., the same two materials used to produce Tables 5 and 6). The lotion resistance of these two materials of the present invention was tested, and the results are shown in Table 7.

TABLE 7: Lotion Resistance of Properties of Coextruded Apertured Film

| | Lotion Resistance (Time to Failure) | | | | |
|---|---|---|---|---|---|
| E-Beam Level (Mrad) → | 0 | 3 | 6 | 9 | 15 |
| Monolayer film | ~5 hours | >7 days | >7 days | >7 days | >7 days |
| Coextruded apertured film | ~2 hours | >2 days | >3 days | >5 days | >6 days |

As shown in Table 7, the lotion resistance of the e-beam treated materials of the present invention is significantly increased. This results in beneficial durability of lotioned components of disposable absorbent articles, for example diapers. Whereas the pre-e-beam treated films or three-dimensionally formed apertured films of the present invention can fail in a matter of hours, the e-beam treated materials will not fail within the time period normally required for disposable absorbent articles to be effective.

## Claims

1. A radiation crosslinked elastomeric material for use in disposable absorbent articles, said material comprising:

a) from 20 to 80 wt% of an elastomeric block copolymer having at least one hard block of polyvinylarene and at least one soft block of polyolefin;
b) from 3 to 60 wt% of at least one thermoplastic resin; and
c) from 5 to 60 wt% of a processing oil;

wherein the crosslinked elastomeric material has a lotion resistance of greater than 2 hours.

2. The crosslinked elastomeric material of Claim 1 wherein the crosslinked elastomeric material has a stress relaxation of less than 20 percent after 200% elongation at room temperature and a stress relaxation of less than 45 percent after 10 hours at 38°C (100°F) and 50% elongation.

3. The crosslinked elastomeric material according to any one of the preceding claims wherein the elastomeric block copolymer is selected from the group consisting of A-B-A triblock copolymers, A-B-A-B tetrablock copolymers, A-B-A-B-A. pentablock copolymers, and mixtures thereof, wherein A is a hard block and comprises from 10% to 80% of the total weight of the copolymer and B is a soft block and comprises from 20% to 90% of the total weight of the copolymer.

4. The crosslinked elastomeric material according to any one of the preceding claims wherein the hard block is a polymer derived from vinylarene monomers selected from the group consisting of styrene, $\alpha$-methyl styrene, other styrene derivatives, and mixtures thereof, and the soft block is a polymer derived from monomers selected from the group consisting of ethylene, propylene, butylene, isoprenes, butadiene, and mixtures thereof.

5. The crosslinked elastomeric material according to any one of the preceding claims wherein the hard block is polystyrene and the soft block is a polymer selected from the group consisting of polyisoprene, polybutadiene, poly(ethylene/propylene), poly(ethylenelbutylene), hydrogenated poly(isoprene/butadiene), and mixtures thereof.

6. The crosslinked elastomeric material according to any one of the preceding claims wherein the hard block has a number-average molecular weight in the range from 1,000 to 200,000, preferably from 2,000 to 100,000, and more preferably from 5,000 to 60,000, and the soft block has a number-average molecular weight in the range from 1,000 to 300,000, preferably from 10,000 to 200,000, and more preferably from 20,000 to 100,000.

7. The crosslinked elastomeric material according to any of the preceding claims wherein the thermoplastic resin has a glass transition temperature in the range from 58°C to 180°C, preferably from 70°C to 150°C, and more preferably from 90°C to 130°C.

8. The crosslinked elastomeric material according to any one of the preceding claims wherein the thermoplastic resin is derived from monomers selected from the group consisting of styrene, $\alpha$-methyl styrene, other styrene derivatives, vinyl toluene, phenylene oxide, and mixtures thereof, and has a number-average molecular weight in the range from 600 to 150,000, preferably from 5,000 to 150,000, and more preferably from 10,000 to 100,000.

9. The crosslinked elastomeric material according to any one of the preceding claims wherein the thermoplastic resin is polystyrene having a number-average molecular weight in the range from 5,000 to 150,000.

10. A coextruded elastomeric film for use in disposable absorbent article, said film comprising an elastomeric layer having opposed first and second surfaces and at least one substantially less elastomeric skin layer substantially continuously joined to one of said first or second surfaces of the elastomeric layer, said elastomeric layer is made of the crosslinked elastomeric material according to any one of the preceding claims.

11. The film according to any one of the preceding claims wherein the elastomeric layer comprises from 20% to 95% of the total thickness of the film and the skin layer comprises from 1% to 40% of the total thickness of the film.

12. The film according to anyone of the preceding claims wherein the film comprises two skin layers, each of said skin layer being substantially continuously joined to one of said opposed surfaces of the elastomeric film.

13. The film according to any one of the preceding claims wherein the skin layer comprises a thermoplastic polymer selected from the group consisting of polyolefin, ethylene copolymers, polystyrene, poly($\alpha$-methyl styrene), polyphenylene oxide and mixtures thereof.

14. The film according to any of the preceding claims further comprises a fibrous nonwoven material joined to at least one surface of the film.

15. A disposable absorbent an article to be worn adjacent to a person's body, said article comprising at least one elasticized portion made of the crosslinked elastomeric material or film according to any one of the preceding claims.

16. The article according to claim 15 wherein the elasticized portion is a waist band, a side panel, a cuff, a topsheet or a backsheet.

**Patentansprüche**

1. Strahlungsvernetztes Elastomermaterial zur Verwendung in Einwegabsorptionsartikeln, wobei das Material Folgendes umfasst:

   a) von 20 bis 80 Gew.-% ein elastomeres Blockcopolymer mit mindestens einem Hartblock aus Polyvinylaren und mindestens einem Weichblock aus Polyolefin;
   b) von 3 bis 60 Gew.-% mindestens ein thermoplastisches Harz; und
   c) von 5 bis 60 Gew.-% ein Prozessöl;

   wobei das vernetzte Elastomermaterial eine Lotionsbeständigkeit von mehr als 2 Stunden aufweist.

2. Vernetztes Elastomermaterial nach Anspruch 1, wobei das vernetzte Elastomermaterial eine Spannungsrelaxation von weniger als 20 Prozent nach einer Verlängerung von 200 % bei Raumtemperatur und eine Spannungsrelaxation von weniger als 45 Prozent nach 10 Stunden bei 38 °C (100 °F) und einer Verlängerung von 50 % aufweist.

3. Vernetztes Elastomermaterial nach einem der vorstehenden Ansprüche, wobei das elastomere Blockcopolymer ausgewählt ist aus der Gruppe bestehend aus A-B-A-Triblock-Copolymeren, A-B-A-B-Tetrablock-Copolymeren, A-B-A-B-A-Pentablock-Copolymeren und Mischungen davon, wobei A ein Hartblock ist und von 10 % bis 80 % des Gesamtgewichts des Copolymers umfasst und B ein Weichblock ist und von 20 % bis 90 % des Gesamtgewichts des Copolymers umfasst.

4. Vernetztes Elastomermaterial nach einem der vorstehenden Ansprüche, wobei der Hartblock ein Polymer ist, das von Vinylaren-Monomeren, ausgewählt aus der Gruppe bestehend aus Styrol, $\alpha$-Methylstyrol, anderen Styrolderivaten und Mischungen davon, abgeleitet ist und der Weichblock ein Polymer ist, das von Monomeren, ausgewählt aus der Gruppe bestehend aus Ethylen, Propylen, Butylen, Isoprenen, Butadien und Mischungen davon, abgeleitet ist.

5. Vernetztes Elastomermaterial nach einem der vorstehenden Ansprüche, wobei der Hartblock Polystyrol ist und der Weichblock ein Polymer, ausgewählt aus der Gruppe bestehend aus Polyisopren, Polybutadien, Poly(ethylen/-propylen), Poly(ethylen/-butylen), hydriertem Poly(isopren/-butadien) und Mischungen davon, ist.

6. Vernetztes Elastomermaterial nach einem der vorstehenden Ansprüche, wobei der Hartblock eine mittlere Molmasse im Bereich von 1 000 bis 200 000, vorzugsweise von 2 000 bis 100 000 und mehr bevorzugt von 5 000 bis 60 000 aufweist und der Weichblock eine mittlere Molmasse im Bereich von 1 000 bis 300 000, vorzugsweise von 10 000 bis 200 000 und mehr bevorzugt von 20 000 bis 100 000 aufweist.

7. Vernetztes Elastomermaterial nach einem der vorstehenden Ansprüche, wobei das thermoplastische Harz eine Glasumwandlungstemperatur im Bereich von 58 °C bis 180 °C, vorzugsweise von 70 °C bis 150 °C und mehr bevorzugt von 90 °C bis 130 °C aufweist.

8. Vernetztes Elastomermaterial nach einem der vorstehenden Ansprüche, wobei das thermoplastische Harz von Monomeren, ausgewählt aus der Gruppe bestehend aus Styrol, $\alpha$-Methylstyrol, anderen Styrolderivaten, Vinyltoluol, Phenylenoxid und Mischungen davon, abgeleitet ist und eine mittlere Molmasse im Bereich von 600 bis 150 000, vorzugsweise von 5 000 bis 150 000 und mehr bevorzugt von 10 000 bis 100 000 aufweist.

9. Vernetztes Elastomermaterial nach einem der vorstehenden Ansprüche, wobei das thermoplastische Harz Polystyrol mit einer mittleren Molmasse im Bereich von 5 000 bis 150 000 ist.

10. Coextrudierte Elastomerfolie zur Verwendung in Einwegabsorptionsartikeln, wobei die Folie eine Elastomerschicht mit einer gegenüberliegenden ersten und zweiten Oberfläche und mindestens eine im Wesentlichen weniger elastomere Hautschicht, die im Wesentlichen durchgehend mit einer der ersten oder der zweiten Oberfläche der Elastomerschicht verbunden ist, umfasst, wobei die Elastomerschicht aus dem vernetzten Elastomermaterial nach einem der vorstehenden Ansprüche hergestellt ist.

**11.** Folie nach einem der vorstehenden Ansprüche, wobei die Elastomerschicht von 20 % bis 95 % der Gesamtdicke der Folie umfasst und die Hautschicht von 1 % bis 40 % der Gesamtdicke der Folie umfasst.

**12.** Folie nach einem der vorstehenden Ansprüche, wobei die Folie zwei Hautschichten umfasst, wobei jede der Hautschichten im Wesentlichen durchgehend mit einer der gegenüberliegenden Oberflächen der Elastomerfolie verbunden ist.

**13.** Folie nach einem der vorstehenden Ansprüche, wobei die Hautschicht ein thermoplastisches Polymer, ausgewählt aus der Gruppe bestehend aus Polyolefin, Ethylencopolymeren, Polystyrol, Poly($\alpha$-methylstyrol), Polyphenylenoxid und Mischungen davon umfasst.

**14.** Folie nach einem der vorstehenden Ansprüche, ferner umfassend ein faseriges Vliesmaterial, welches mit mindestens einer Oberfläche der Folie verbunden ist.

**15.** Einwegabsorptionsartikel, welcher an den Körper einer Person anliegend zu tragen ist, wobei der Artikel mindestens einen elastifizierten Teil umfasst, der aus dem vernetzten Elastomermaterial oder der vernetzten Elastomerfolie nach einem der vorstehenden Ansprüche hergestellt ist.

**16.** Artikel nach Anspruch 15, wobei der elastifizierte Teil ein Taillenband, ein Seitenstreifen, ein Bündchen, eine Oberschicht oder eine Unterschicht ist.


**Revendications**

**1.** Matériau élastomère réticulé par rayonnement pour une utilisation dans des articles absorbants jetables, ledit matériau comprenant:

a) de 20 à 80 % en poids d'un copolymère élastomère séquencé ayant au moins un bloc rigide de polyvinylarène et au moins un bloc souple de polyoléfine;
b) de 3 à 60 % en poids d'au moins une résine thermoplastique; et
c) de 5 à 60 % en poids d'une huile plastifiante;

dans lequel le matériau élastomère réticulé a une résistance en lotion supérieure à 2 heures.

**2.** Matériau élastomère réticulé selon la revendication 1, où le matériau élastomère réticulé a une relaxation en contrainte de moins de 20 pour cent après 200 % d'allongement à la température ambiante et une relaxation en contrainte de moins de 45 pour cent après 10 heures à 38 °C (100 °F) et 50 % d'allongement.

**3.** Matécriau élastomère réticulé selon l'une quelconque des revendications précédentes, dans lequel le copolymère élastomère séquencé est choisi parmi le groupe consistant en des copolymères tribloc A-B-A, des copolymères tétrabloc A-B-A-B, des copolymères pentabloc A-B-A-B-A, et leurs mélanges, dans lequel A est un bloc rigide et constitue de 10 % à 80 % du poids total du copolymère et B est un bloc souple et constitue de 20 % à 90 % du poids total du copolymère.

**4.** Matériau élastomère réticulé selon l'une quelconque des revendications précédentes, dans lequel le bloc rigide est un polymère dérivé de monomères vinylarène choisis parmi le groupe constitué de styrène, $\alpha$-méthyl styrène, d'autres dérivés de styrène, et leurs mélanges, et le bloc souple est un polymère dérivé de monomères choisis parmi le groupe constitué d'éthylène, propylène, butylène, isoprènes, butadiène, et leurs mélanges.

**5.** Matériau élastomère réticulé selon l'une quelconque des revendications précédentes, dans lequel le bloc rigide est du polystyrène et le bloc souple est un polymère choisi parmi le groupe constitué de poly-isoprène, polybutadiène, poly(éthylène/propylène), poly(éthylène/butylène), poly(isoprène/butadiène) hydrogéné, et leurs mélanges.

**6.** Matériau élastomère réticulé selon l'une quelconque des revendications précédentes, dans lequel le bloc rigide a une masse moléculaire moyenne en nombre dans la gamme de 1000 à 200 000, de préférence de 2000 à 100 000, et plus préférablement de 5000 à 60 000, et le bloc souple a une masse moléculaire moyenne en nombre dans la gamme de 1000 à 300 000, de préférence de 10 000 à 200 000, et plus préférablement de 20 000 à 100 000.

**7.** Matériau élastomère réticulé selon l'une quelconque des revendications précédentes, dans lequel la résine thermoplastique a une température de transition vitreuse dans la gamme de 58 °C à 180 °C, de préférence de 70 °C à 150°C, et plus préférablement de 90 °C à 130 °C.

**8.** Matériau élastomère réticulé selon l'une quelconque des revendications précédentes, dans lequel la résine thermoplastique est dérivée de monomères choisis parmi le groupe constitué de styrène, $\alpha$-méthyl styrène, d'autres dérivés de styrène, vinyl-toluène, oxyde de phénylène, et leurs mélanges, et a une masse moléculaire moyenne en nombre dans la gamme de 600 à 150 000, de préférence de 5000 à 150 000, et plus préférablement de 10 000 à 100 000.

**9.** Matériau élastomère réticulé selon l'une quelconque des revendications précédentes, dans lequel la résine thermoplastique est du polystyrène ayant une masse moléculaire moyenne en nombre dans la gamme de 5000 à 150 000.

**10.** Pellicule élastomère coextrudée pour une utilisation dans des articles absorbants jetables, ladite pellicule élastomère comprenant une couche élastomère ayant une première et une deuxième surfaces opposées et au moins une couche superficielle sensiblement moins élastomère sensiblement liée en continu à une desdites première ou deuxième surfaces de la couche élastomère, ladite couche élastomère est constituée du matériau élastomère réticulé selon l'une quelconque des revendications précédentes.

**11.** Pellicule selon l'une quelconque des revendications précédentes, dans laquelle la couche élastomère constitue de 20 % à 95 % de l'épaisseur totale de la pellicule et la couche superficielle constitue de 1 % à 40 % de l'épaisseur totale de la pellicule.

**12.** Pellicule selon l'une quelconque des revendications précédentes, dans laquelle la pellicule comprend deux couches superficielles, chacune desdites couches superficielles étant sensiblement liée en continu à une desdites surfaces opposées de la pellicule élastomère.

**13.** Pellicule selon l'une quelconque des revendications précédentes dans laquelle la couche superficielle comprend un polymère thermoplastique choisi dans le groupe constitué de polyoléfine, copolymères d'éthylène, polystyrène, poly($\alpha$-méthyl styrène), oxyde de polyphénylène et leurs mélanges.

**14.** Pellicule selon l'une quelconque des revendications précédentes, comprenant en outre un matériau nontissé fibreux lié à au moins une surface de la pellicule.

**15.** Article absorbant jetable à porter de façon adjacente au corps d'une personne, ledit article comprenant au moins une partie élastifiée constituée du matériau élastomère réticulé ou de la pellicule selon l'une quelconque des revendications précédentes.

**16.** Article selon la revendication 15, dans lequel la partie élastifiée est une ceinture, un pan latéral, un brassard, une feuille de dessus ou une feuille de fond.

Fig. 1

(PRIOR ART)

Fig. 2

90

103

81

80

101

81

103

85

101

120

## Fig. 3

103

120

101

103

## Fig. 4

Fig. 5

Fig. 6

Fig. 7

Fig. 8A

Fig. 8B

Fig. 8C

Fig. 9

Fig. 10

1.00mm

Fig. 11

Fig. 12

Fig. 13

Fig. 14

Fig. 15

520

522

524

Fig. 16

559

543

540

580

550

555

562

561

563

574

580

551

556

573

570

566 567

545

Fig. 17

Fig. 18

Fig. 19